(19) Europäisches Patentamt
European Patent Office
Office européen des brevets

(11) **EP 3 632 950 B1**

(12) **EUROPEAN PATENT SPECIFICATION**

(45) Date of publication and mention of the grant of the patent:
**17.07.2024 Bulletin 2024/29**

(21) Application number: **18306322.1**

(22) Date of filing: **05.10.2018**

(51) International Patent Classification (IPC):
***C08G 59/38*** *(2006.01)* ***C08G 59/70*** *(2006.01)*
***G02B 1/04*** *(2006.01)* ***C09D 163/00*** *(2006.01)*
***C08K 5/3435*** *(2006.01)*

(52) Cooperative Patent Classification (CPC):
(C-Sets available)
**C08G 59/38; C08G 59/70; C09D 163/00; G02B 1/04** (Cont.)

(54) **STORAGE-STABLE HEAT-CURABLE HYBRID EPOXY FUNCTIONAL COMPOSITION AND TRANSPARENT HEAT-CURED COATINGS PREPARED THEREFROM**

LAGERSTABILE, WÄRMEHÄRTBARE HYBRIDE EPOXIDFUNKTIONALE ZUSAMMENSETZUNG UND DARAUS HERGESTELLTE TRANSPARENTE, WÄRMEHÄRTBARE BESCHICHTUNGEN

COMPOSITION ÉPOXYDE HYBRIDE FONCTIONNELLE STABLE AU STOCKAGE ET REVÊTEMENTS THERMODURCISSABLES TRANSPARENTS ET PRÉPARÉS À PARTIR DE LADITE COMPOSITION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**08.04.2020 Bulletin 2020/15**

(73) Proprietor: **Essilor International**
**94220 Charenton-le-Pont (FR)**

(72) Inventor: **ZHENG, Haipeng**
**Dallas, TX Texas 75235 (US)**

(74) Representative: **Jacobacci Coralis Harle**
**32, rue de l'Arcade**
**75008 Paris (FR)**

(56) References cited:
**EP-A1- 3 327 096** **JP-A- 2018 104 576**
**JP-B2- 6 077 321**

EP 3 632 950 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C09D 163/00, C08K 5/3435;**
**G02B 1/04, C08L 63/00**

## Description

The present invention relates to heat-curable epoxy functional compositions having improved pot life stability, to abrasion- and/or scratch-resistant epoxy-based coatings obtained therefrom, and to optical articles, in particular ophthalmic lenses, capable of at least partially blocking transmission of light in a selected wavelength range of the light spectrum, containing such coatings.

In the optics field, it is usual to coat articles with coatings so as to impart to the articles various mechanical and/or optical properties. Thus, classically, coatings such as impact-resistant, anti-abrasion/scratch-resistant and/or antireflection coatings are successively formed onto an ophthalmic lens.

It may be desirable to impart a color, or a filtering function to the optical article so as to prevent or limit transmission of harmful light to the retina, but this should be done without modifying its properties such as abrasion resistance, transparency or adhesion of the coatings.

Indeed, visible light as perceived by humans approximately extends over a spectrum ranging from a 380 nm wavelength to a 780 nm wavelength. The part of this spectrum ranging from around 400 nm to around 500 nm does correspond to high-energy wavelengths, essentially blue light.

Many studies (see for example Kitchel E., "The effects of blue light on ocular health", Journal of Visual Impairment and Blindness Vol. 94, No. 6, 2000 or Glazer-Hockstein and al., Retina, Vol. 26, No. 1. pp. 1-4, 2006) suggest that part of the blue light has phototoxic effects on human eye health, and especially on the retina. Ocular photobiology studies demonstrated that an excessively prolonged or intense exposure to blue light may induce severe ophthalmic diseases such as age-related macular degeneration (ARMD) or cataract. Thus, it is recommended to limit the exposure to blue light potentially harmful, in particular as regards the wavelength band with an increased dangerousness (420-450 nm).

It is furthermore necessary to eliminate as much as possible the harmful influence of ultraviolet light (UV light) on the eye of a user. Ultraviolet (UV) light is the portion of the luminous spectrum ranging from 100 to 380 nm. Amongst the UV bands reaching the earth surface, the UVA band, ranging from 315 nm to 380 nm, and the UVB band, ranging from 280 nm to 315 nm, are particularly harmful to the retina.

Further, it is recommended to limit exposure of the eyes to harmful near infrared light (NIR), which covers the wavelength range from 780 to 1400 nm. Acute NIR exposure is well known to lead to cataract, and recent investigations showed strong presumption that cataract can also be triggered upon chronic NIR exposure.

To alleviate such damages, it has been suggested to cut at least partially UV light, NIR light and/or the troublesome part of the blue light spectrum from 400 nm to 460 nm, for example in the patent application WO 2008/024414, by means of lenses comprising a film partially inhibiting the light in the suitable wavelength range, through absorption or through reflection. This can be done by incorporating a yellow dye into the optical element.

The international application WO 2018/095680 and European application 17 306 651.5 disclose heat-curable compositions comprising at least one epoxy monomer comprising two or three epoxy groups, which is not a hydrolysis-polymerizable silicon compound, at least one epoxy compound bearing at least one silicon atom having at least one hydrolyzable group directly linked to the silicon atom and at least one epoxy group, and at least one epoxy ring-opening catalyst. The composition can further include UV absorbers and free radical scavengers (such as hindered amine light stabilizers and antioxidants).

US 8691926 discloses a polymerization curable composition prepared by blending specific amounts of a photochromic compound and a specific light stabilizer such as bis(1,2,2,6,6-pentamethyl-4-piperidyl) sebacate with monomers that are essentially acrylate monomers, and not epoxy monomers. The polymerization curable composition provides a cured product having excellent photochromic properties and has high long-term storage stability, which means that the photochromic compound does not deteriorate after it is kept for a long time in the cured product. The storage stability of the coating composition has not been evaluated.

JP 2014-148596 relates to a curable resin composition containing an epoxy resin, a polysiloxane compound represented by an average composition formula (1): $R^1a(OR^2)bSiO(4-a-b)/2$, wherein $R^1$ represents an alkyl group, an alkenyl group, an aryl group, an aralkyl group, a monovalent organic group having an epoxy group, or a monovalent organic group having an oxetanyl group, an organic aluminum compound and a compound having at least one hindered amine group.

A problem of these coating compositions is that most of absorbing dyes used for making optical articles with optical filtering capability, and in particular yellow dyes from families such as perylene, coumarin, porphyrin and acridine, show photo-stability issues when exposed to the UV rays and/or sunlight.

Moreover, in order to avoid only in-situ coating processes, there is a need for an epoxy coating composition that is stable for several weeks in at least one or more of the following conditions: when stored at low temperatures (such as -18°C in a freezer) or a specific temperature such as 4°C (in fridge), when stored in a temperature range of 5-15°C such as a temperature-controlled coating tank and/or when stored at ambient temperature, and that can be conveniently applied by dip coating or spin coating.

Usually, epoxy coating compositions with filter functions have a shelf life of at least 6 months when kept in a

freezer at -18°C, without changes of the coating properties and solution parameters such as viscosity and solid content. However, they show a problem with storage stability when the temperature is increased to 7°C or above, leading to the necessity to adapt coating process parameters, such as the withdrawal speed in the case of a dip coating process, and the drying time.

In view of the foregoing, there is a need for a sol-gel coating composition having a long term stability and the ability to provide a final cured coating resistant to scratch and abrasion like usual hard coats, transparent, compatible with and adhering to the substrate or additional layers, and exhibiting overall performances such as improved cosmetic appearance (low haze), high light filtering efficiency with low photo-degradation.

The process for manufacturing such an article should be simple, easy to implement, reproducible and involve an optimized curing sequence.

It has been surprisingly found that it was possible to obtain an epoxy-based coating composition having improved storage stability (in terms of viscosity and solid content), even at room temperature, by incorporating a specific hindered amine light stabilizer into said coating composition, while this category of compound is ordinarily used to avoid photo-degradation of dyes. The performances of the resulting coating are maintained, in particular a high level of hardness, good adhesion and low cosmetic haze.

To address the needs of the present invention and to remedy to the mentioned drawbacks of the prior art, the applicant provides a heat-curable composition comprising:

(a) at least one epoxy monomer having two or three epoxy groups, which is not a silicon compound having at least one hydrolyzable group directly linked to the silicon atom,
(b) at least one epoxy compound bearing at least one silicon atom having at least one hydrolyzable group directly linked to the silicon atom and at least one group comprising an epoxy function linked to the silicon atom though a carbon atom, and/or a hydrolyzate thereof, wherein the composition comprises from 1 to 15 % by weight of compounds (b) relative to the total weight of the composition,
(f) at least one UV absorber and/or (g) at least one antioxidant,
(c) at least one epoxy ring-opening catalyst, and
at least one compound (e) comprising at least two groups having the following formula:

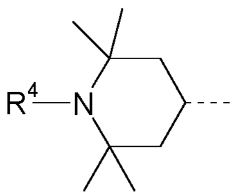

in which $R^4$ represents a hydrogen atom, an alkyl group, an alkoxy group or an oxyl group.

The composition can further comprise:
(d) at least one epoxy monomer comprising from 4 to 8 epoxy groups that is not a silicon compound having at least one hydrolyzable group directly linked to the silicon atom.

Detailed description of the invention

As used herein, when an article comprises one or more layer(s) or coating(s) on the surface thereof, "depositing a layer or a coating onto the article" means that a layer or a coating is deposited onto the uncovered (exposed) surface of the article external coating, that is to say the coating that is the most distant from the substrate.

As used herein, a coating that is "on" a substrate/coating or which has been deposited "onto" a substrate/coating is defined as a coating that (i) is positioned above the substrate/coating, (ii) is not necessarily in contact with the substrate/coating, that is to say one or more intermediate coating(s) may be interleaved between the substrate/coating and the relevant coating (however, it does preferably contact said substrate/coating), and (iii) does not necessarily completely cover the substrate/coating. When "a coating 1 is said to be located under a coating 2", it should be understood that coating 2 is more distant from the substrate than coating 1.

The optical article according to the invention is preferably a transparent optical article, in particular an optical lens or lens blank, more preferably an ophthalmic lens or lens blank.

The term "ophthalmic lens" is used to mean a lens adapted to a spectacle frame to protect the eye and/or correct the sight. Said lens can be chosen from afocal, unifocal, bifocal, trifocal and progressive lenses. Although ophthalmic optics is a preferred field of the invention, it will be understood that this invention can be applied to optical

elements of other types where filtering specified wavelengths may be beneficial, such as, for example, lenses for optical instruments, safety goggles, filters particularly for photography, astronomy or the automobile industry, optical sighting lenses, ocular visors, optics of lighting systems, screens, glazings, etc.

If the optical article is an optical lens, it may be coated on its front main surface, rear main side, or both sides with the coating of the invention. As used herein, the rear face of the substrate is intended to mean the face which, when using the article, is the nearest from the wearer's eye. It is generally a concave face. On the contrary, the front face of the substrate is the face which, when using the article, is the most distant from the wearer's eye. It is generally a convex face. The optical article can also be a plano article.

A substrate, in the sense of the present invention, should be understood to mean an uncoated substrate, and generally has two main faces. The substrate may in particular be an optically transparent material having the shape of an optical article, for example an ophthalmic lens destined to be mounted in glasses. In this context, the term "substrate" is understood to mean the base constituent material of the optical lens and more particularly of the ophthalmic lens. This material acts as support for a stack of one or more functional coatings or layers.

The substrate of the optical article, coated on at least one main face with a coating according to the invention, may be a mineral or an organic glass, for instance an organic glass made from a thermoplastic or thermosetting plastic, generally chosen from transparent materials of ophthalmic grade used in the ophthalmic industry.

To be mentioned as especially preferred classes of substrate materials are polycarbonates, polyamides, polyimides, polysulfones, copolymers of polyethylene therephthalate and polycarbonate, polyolefins such as polynorbornenes, resins resulting from polymerization or (co)polymerization of alkylene glycol bis allyl carbonates such as polymers and copolymers of diethylene glycol bis(allylcarbonate) (marketed, for instance, under the trade name CR-39® by the PPG Industries company. Marketed lenses obtained by polymerizing of diethylene glycol bis (allylcarbonate) are referred to as ORMA® lenses from ESSILOR), polycarbonates such as those derived from bisphenol A, (meth)acrylic or thio(meth)acrylic polymers and copolymers such as polymethyl methacrylate (PMMA), urethane and thiourethane polymers and copolymers, epoxy polymers and copolymers, episulfide polymers and copolymers.

Prior to depositing coatings, the surface of the substrate is usually submitted to a physical or chemical surface activating and cleaning treatment, so as to improve the adhesion of the layer to be deposited, such as disclosed in WO 2013/013929.

The optical article comprises a substrate having at least one main surface bearing a coating resulting from the heat-curing of a heat-curable composition according to the invention. Said coating is an epoxy coating, resulting from the polymerization of compounds (a), (b) and optionally (d), which all comprise at least one epoxy group. In the present invention, a coating containing hybrid epoxy copolymers will be generated by using epoxy compounds (a) and optionally (d) according to the invention, devoid of reactive silicon atom, together with organosilanes (b).

The epoxy compounds according to the invention are cyclic ethers and are preferably epoxides (oxiranes). As used herein, the term epoxide represents a subclass of epoxy compounds containing a saturated three-membered cyclic ether. The epoxy groups of compounds (a), (b) and (d) are preferably chosen from glycidyl groups and cycloaliphatic epoxy groups, more preferably from alkyl glycidyl ether groups and cycloaliphatic epoxy groups.

In the present patent application, the term "alkyl" means a linear or branched, saturated or unsaturated monovalent hydrocarbon-based radical, preferably containing from 1 to 25 carbon atoms. The term alkyl includes acyclic groups preferably containing from 1 to 8 carbon atoms, more preferably from 1 to 6 carbon atoms, such as methyl, ethyl, n-propyl, isopropyl, butyl and n-hexyl groups, the cycloaliphatic and cycloalkyl groups preferably containing from 3 to 7 carbon atoms, the cycloalkylmethyl groups preferably containing from 4 to 8 carbon atoms.

In an embodiment, the alkyl group is connected via an sp3 carbon atom and may be substituted with one or more aryl groups and/or may comprise one or more heteroatoms such as N, S, O or an halogen. Examples that can be mentioned include arylalkyl groups such as the trityl group ($-CPh_3$), the benzyl group or the 4-methoxybenzyl group, alkoxyalkyl groups, especially dialkoxymethyl groups such as diethoxymethyl or dimethoxymethyl groups, $CH_2CO_2R^{11}$ groups, in which $R^{11}$ represents an optionally substituted alkyl or aryl group.

The term "cycloalkyl" also includes "heterocycloalkyl" groups, i.e. non-aromatic monocyclic or polycyclic rings in which one or more carbon atoms of the ring(s) have been replaced with a heteroatom such as nitrogen, oxygen, phosphorus or sulfur. The heterocycloalkyl group preferably comprises 1 to 4 endocyclic heteroatoms. The heterocycloalkyl groups may be structures containing one or more nonaromatic rings.

The term "cycloaliphatic" denotes a saturated or unsaturated but non aromatic carbocyclic radical comprising one or several optionally fused rings, which may optionally be substituted with one or more of the groups cited above for the aryl group. The term "cycloaliphatic" also includes "heterocycloaliphatic" groups, i.e. non-aromatic monocyclic or polycyclic rings in which one or more carbon atoms of the ring(s) have been replaced with a heteroatom such as nitrogen, oxygen, phosphorus or sulfur. The cycloaliphatic group is preferably a cycloalkyl group.

The term "aryl" denotes an aromatic carbocyclic radical comprising only one ring (for example a phenyl group) or several, optionally fused, rings (for example naphthyl or terphenyl groups), which may optionally be substituted with one or more groups such as, without limitation, alkyl (for example methyl), hydroxyalkyl, aminoalkyl, hydroxyl, thiol,

amino, halo (fluoro, bromo, iodo or chloro), nitro, alkylthio, alkoxy (for example methoxy), aryloxy, monoalkylamino, dialkylamino, acyl, carboxyl, alkoxycarbonyl, aryloxycarbonyl, hydroxysulfonyl, alkoxysulfonyl, aryloxysulfonyl, alkylsulfonyl, alkylsulfinyl, cyano, trifluoromethyl, tetrazolyl, carbamoyl, alkylcarbamoyl or dialkylcarbamoyl groups. Alternatively, two adjacent positions of the aromatic ring may be substituted with a methylenedioxy or ethylenedioxy group.

The term "aryl" also includes "heteroaryl" groups, i.e. aromatic rings in which one or more carbon atoms of the aromatic ring(s) have been replaced with a heteroatom such as nitrogen, oxygen, phosphorus or sulfur.

Compound (a) according to the invention is a bi- or tri-functional epoxy monomer having two or three epoxy groups per molecule, which is not a silicon compound having at least one hydrolyzable group directly linked to the silicon atom. In the present application, Si-O-Si groups are considered as not being hydrolyzable groups. In one embodiment, compound (a) does not comprise any silicon atom. In the present application, oligomers are considered as being monomers.

More preferably, compound (a) according to the invention does not contain other reactive functions than the epoxy group(s), capable of reacting with other polymerizable functions present in the composition and that would be linked to the polymer matrix of the coating. In other words, preferred epoxy compounds are "pure" epoxy compounds.

Compound (a) preferably comprises two or three glycidyl ether groups and/or cycloaliphatic epoxy groups. The glycidyl ether group is preferably an alkyl glycidyl ether group.

Glycidyl ethers are synthetic compounds characterized by the following group in which $R_1$ denotes a monovalent group:

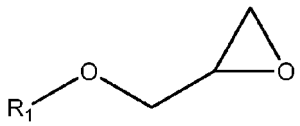

The preferred cycloaliphatic epoxy groups are shown hereunder, in which the hydrogen atoms in the structures may be substituted by one or more substituents such as those cited above as substituents for an aryl group:

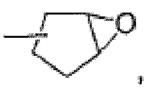 , 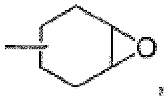 , 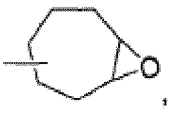 ,

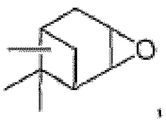 , 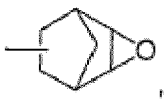 , and 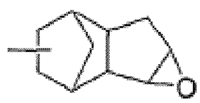

In one embodiment, compound (a) comprises a β-(3,4-epoxycyclohexyl)alkyl group such as the β-(3,4-epoxycyclohexyl)methyl and β-(3,4-epoxycyclohexyl)ethyl groups.

Compound (a) can be selected from the group consisting of trimethylolethane triglycidyl ether (Erisys™ GE-31, from CVC thermoset Specialties), trimethylolmethane triglycidyl ether, trimethylolpropane triglycidyl ether (Erisys™ GE-30, from CVC thermoset Specialties), triphenylolmethane triglycidyl ether, trisphenol triglycidyl ether, tetraphenylol ethane triglycidyl ether, tetraglycidyl ether of tetraphenylol ethane, p-aminophenol triglycidyl ether, 1,2,6-hexanetriol triglycidyl ether, glycerol triglycidyl ether, diglycerol triglycidyl ether, glycerol ethoxylate triglycidyl ether, castor oil triglycidyl ether, propoxylated glycerine triglycidyl ether, ethylene glycol diglycidyl ether, 1,4-butanediol diglycidyl ether, neopentyl glycol diglycidyl ether, cyclohexanedimethanol diglycidyl ether, dipropylene glycol diglycidyl ether, polypropylene glycol diglycidyl ether, dibromoneopentyl glycol diglycidyl ether, hydrogenated bisphenol A diglycidyl ether (Epalloy® 5000 from CVC Specialty Chemicals), 3',4'-epoxycyclohexylmethyl-3,4-epoxycyclohexane carboxylate (Uvacure® 1500 from UCB Chemicals, Cyracure® UVR-6110 and UVR® 6105 from Union Carbide), bis(3,4-epoxycyclohexylmethyl) adipate (UVR-6128 from Dow Chemical Company), limonene diepoxide (6-methyl-3-(2-methyloxiran-2-yl)-7-oxabicyclo[4.1.0]heptane, Celloxide 3000 from Daicel Chemical Industries Ltd.), 1,3-bis[2-(3,4-epoxycyclohexyl)ethyl]tetramethyldisiloxane (SIB1092.0 from Gelest, formula Xr), bisphenol A diglycidyl ether resins (n generally ranging from 0 to 25, Epon 828 from Shell Chemical, formula Xb), hexahydrophthalic anhydride diglycidyl ester (CY® 184 from Ciba) and derivatives thereof of formulae Xn and Xo, and mixtures thereof. One can also use Epalloy® 5001 from CVC Specialty Chemicals, which is a faster cure version of Epalloy® 5000 through increased epoxy functionality (two-component mixture, functionality = 2.4).

In one embodiment of the invention, the composition further comprises at least one compound (d), which is a polyfunctional epoxy monomer comprising from 4 to 8 epoxy groups (preferably 4 to 6) that is not a silicon compound

having at least one hydrolyzable group directly linked to the silicon atom. In one embodiment, compound (d) does not comprise any silicon atom.

Compounds (a) provide coatings having a lower cross-link density than highly functionalized compounds (d) after a final post-cure. Thus, the presence of compounds (d) can improve mechanical properties of a matrix such as abrasion and/or scratch resistance.

More preferably, compound (d) according to the invention does not contain other reactive functions than the epoxy group(s), capable of reacting with other polymerizable functions present in the composition and that would be linked to the polymer matrix of the coating. In other words, preferred epoxy compounds are "pure" epoxy compounds.

Compound (d) preferably comprises 4 to 8 glycidyl ether groups and/or cycloaliphatic epoxy groups. The glycidyl ether group is preferably an alkyl glycidyl ether group.

The preferred cycloaliphatic epoxy groups are the same as those shown for compounds (a). In one embodiment, compound (d) comprises a β-(3,4-epoxycyclohexyl)alkyl group such as the β-(3,4-epoxycyclohexyl)methyl and β-(3,4-epoxycyclohexyl)ethyl groups.

Compound (d) can be selected from the group consisting of diglycerol tetraglycidyl ether, pentaerythritol tetraglycidyl ether, sorbitol polyglycidyl ether (Erisys™ GE-60, from CVC thermoset Specialties), 1,1,1-tris-(p-hydroxy phenyl) ethane triglycidyl ether (EPALLOY® 9000 from CVC Specialty Chemicals), 1,1,1-tris-(p-hydroxyphenyl) methane triglycidyl ether (Tactix 742 from Ciba), tetrakis (4-hydroxyphenyl) ethane tetraglycidyl ether (Epon 1031 from Shell Chemical, formula Xi), epoxycyclohexyl POSS® Cage Mixture (EP0408 from Hybrid Plastics, having 8 epoxy groups, formula Xd), the 2-(3,4-epoxycyclohexyl)ethyl compound of formula Xs (available from Gelest), and mixtures thereof.

The compounds corresponding to the formulae cited in the above paragraphs are represented hereunder:

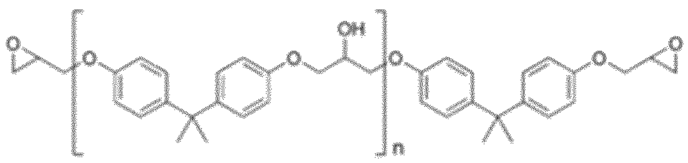
Xb

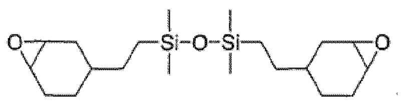
Xr

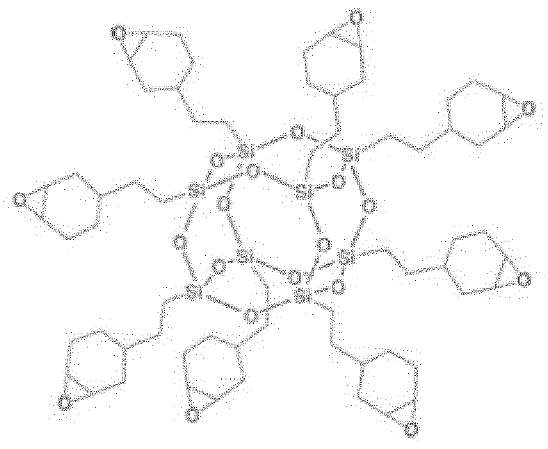
Xd

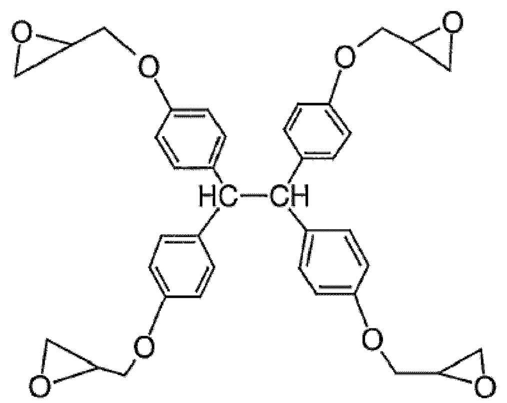
Xi

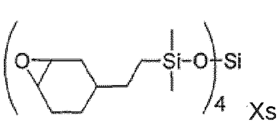
Xs

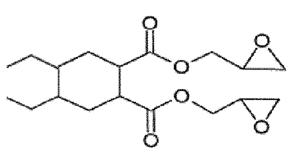
Xn

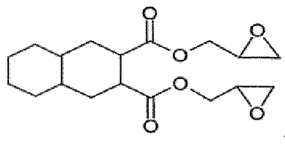
Xo

The composition preferably comprises from 10 to 60 % by weight of monomers (a) and (d) (if present), more preferably from 20 to 55 %, even more preferably from 30 to 50 %, relative to the total weight of the composition.

The composition preferably comprises from 10 to 50 % by weight of compounds (a), more preferably from 15 to 50 %, even more preferably from 20 to 45 %, relative to the total weight of the composition.

When compounds (d) are present, they preferably represent from 1 to 25 % of the weight of the composition, preferably from 5 to 20 % by weight.

The heat-curable composition comprises at least one compound (b), which is an epoxy compound bearing at

least one silicon atom having at least one hydrolyzable group directly linked to the silicon atom and at least one group comprising an epoxy function linked to the silicon atom through a carbon atom, and/or a hydrolyzate thereof. Compound (b) preferably has from 2 to 6, more preferably 2 or 3 functional groups generating a silanol group under hydrolysis. Said compound is considered as being an organic compound, and preferably has formula (II):

$$R_{n'}Y_mSi(X)_{4-n'-m} \qquad (II)$$

in which the R groups are identical or different and represent monovalent organic groups linked to the silicon atom through a carbon atom and that do not contain any epoxy group, the Y groups are identical or different and represent monovalent organic groups linked to the silicon atom through a carbon atom and containing at least one epoxy group, the X groups are identical or different and represent hydrolyzable groups or hydrogen atoms, m and n' are integers such that m is equal to 1 or 2 and n' + m = 1 or 2.

The integers n and m define three groups of compounds II: compounds of formula $RYSi(X)_2$, compounds of formula $Y_2Si(X)_2$, and compounds of formula $YSi(X)_3$. Among these compounds, epoxysilanes having the formula $YSi(X)_3$ are preferred.

The monovalent R groups linked to the silicon atom through a Si-C bond are organic groups. These groups may be, without limitation, hydrocarbon groups, either saturated or unsaturated, preferably $C_1$-$C_{10}$ groups and better $C_1$-$C_4$ groups, for example an alkyl group, preferably a $C_1$-$C_4$ alkyl group such as methyl or ethyl, an aminoalkyl group, an alkenyl group, such as a vinyl group, a $C_6$-$C_{10}$ aryl group, for example an optionally substituted phenyl group, in particular a phenyl group substituted with one or more $C_1$-$C_4$ alkyl groups, a benzyl group, a (meth)acryloxyalkyl group.

The most preferred R groups are alkyl groups, in particular $C_1$-$C_4$ alkyl groups, and ideally methyl groups.

The X groups lead to an OH group upon hydrolysis. It is worth noting that SiOH bonds may be initially present in the compounds of formula II, which are considered in this case as hydrolyzates. Hydrolyzates also encompass siloxane salts.

The X groups may independently and without limitation represent alkoxy groups $-O-R^1$, wherein $R^1$ preferably represents a linear or branched alkyl or alkoxyalkyl group, preferably a $C_1$-$C_4$ alkyl group, acyloxy groups $-O-C(O)R^3$, wherein $R^3$ preferably represents an alkyl group, preferably a $C_1$-$C_6$ alkyl group, and more preferably a methyl or ethyl group, halogen groups such as Cl and Br, amino groups optionally substituted with one or two functional groups such as an alkyl or silane group, for example the $NHSiMe_3$ group, alkylenoxy groups such as the isopropenoxy group. Hydroxyl groups are considered as being hydrolyzable groups.

Most preferred epoxysilanes are those wherein, in formula II, n'=0, m=1 and X is a C1-C5 alkoxy group, preferably $OCH_3$.

The monovalent Y groups linked to the silicon atom through a Si-C bond are organic groups since they contain at least one epoxy function, preferably one epoxy function. By epoxy function, it is meant a group of atoms, in which an oxygen atom is directly linked to two adjacent carbon atoms or non adjacent carbon atoms comprised in a carbon containing chain or a cyclic carbon containing system. Among epoxy functions, oxirane functions are preferred, i.e. saturated three-membered cyclic ether groups.

The preferred Y groups are groups of formulae III and IV:

III 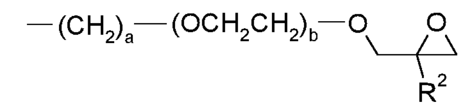

IV 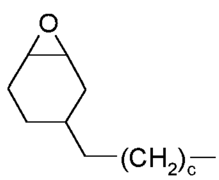

in which $R^2$ is an alkyl group, preferably a methyl group, or a hydrogen atom, ideally a hydrogen atom, a and c are integers ranging from 1 to 6, and b is 0, 1 or 2.

The preferred group having formula III is the γ-glycidoxypropyl group ($R^2$ = H, a = 3, b = 0) and the preferred (3,4-epoxycyclohexyl)alkyl group of formula IV is the β-(3,4-epoxycyclohexyl)ethyl group (c = 1). The γ-glycidoxyethoxypropyl group may also be employed ($R^2$ = H, a = 3, b = 1).

Preferred epoxysilanes of formula II are epoxyalkoxysilanes, and most preferred are those having one Y group and three alkoxy X groups. Particularly preferred epoxytrialkoxysilanes are those of formulae V and VI:

V 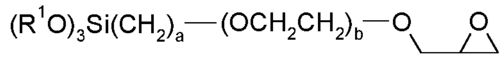

VI 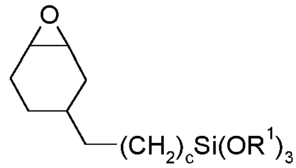

in which $R^1$ is an alkyl group having 1 to 6 carbon atoms, preferably a methyl or ethyl group, and a, b and c are such as defined above.

Examples of such epoxysilanes include but are not limited to γ-glycidoxymethyl trimethoxysilane, γ-glycidoxymethyl triethoxysilane, γ-glycidoxymethyl tripropoxysilane, γ-glycidoxyethyl trimethoxysilane, γ-glycidoxyethyl triethoxysilane, γ-glycidoxyethyl tripropoxysilane, γ-glycidoxypropyl trimethoxysilane, γ-glycidoxypropyl triethoxysilane, γ-glycidoxypropyl tripropoxysilane, γ-glycidoxypropyl methyldiethoxysilane, 2-(3,4-epoxycyclohexyl) ethyltrimethoxysilane, 2-(3,4-epoxycyclohexyl) ethyltriethoxysilane. Other useful epoxytrialkoxysilanes are described in Patents US 4,294,950, US 4,211,823, US 5,015,523, EP 0614957, US 2009/0311518, US 2011/0058142 (compounds of formulae I, VII and VIII) and WO 94/10230. Among those silanes, γ-glycidoxypropyltrimethoxysilane (GLYMO) is preferred.

According to one aspect of this invention, hydrolysis-polymerizable compound (b) is generally hydrolyzed before being mixed to the other components of the composition. The hydrolysis may be performed as known in the art, by using acidic catalysts (such as hydrochloric acid, acetic acid...), in the presence of water.

The composition preferably comprises from 2 to 10 % of compounds (b), more preferably from 3 to 8 %, relative to the total weight of the composition.

In one embodiment, the composition comprises less than 50 % by weight of compounds (b), more preferably less than 40 %, 30 % or 20 % by weight, relative to the total weight of polymerizable compounds present in the composition.

Despite the epoxysilane is generally under hydrolyzed form, the amount of epoxysilane will be conventionally defined as the weight of the initial precursor before its hydrolysis. Hydrolysis of alkoxy groups liberates the associated alcohol to form silanol groups which will condense spontaneously. Preferably, the alkoxysilane is reacted with a stoichiometric amount of water to hydrolyze the hydrolyzable groups, typically the alkoxy groups.

In some aspects of the invention, the composition comprises 25 to 60 % by weight relative to the total weight of the composition of compounds (a), (d) (if present) and (b), more preferably from 30 to 55 % by weight. The dry extract weight of those epoxy compounds preferably represents at least 50 % of the dry extract weight of the composition, preferably at least 60 %, at least 70 %, at least 80 %, at least 85 %, at least 90 %, at least 92 % or at least 95 % of the dry extract weight of the composition.

In an embodiment, the composition is such that the ratio: dry extract weight of monomers (a) and (d) (if present) / dry extract weight of compounds (b) ranges from 97/3 to 70/30, more preferably from 95/5 to 80/20.

In another embodiment, the composition is such that the weight ratio: monomers (a) / monomers (d) ranges from 100/0 to 50/50, more preferably from 100/0 to 60/40, even more preferably from 95/5 to 63/37.

It is also possible to add to the composition low amounts of additional polymerizable epoxy compounds that are not epoxy compounds (a), (b) or (d) according to the invention, typically less than 20 % by weight relative to the total weight of the composition, more preferably less than 15 % by weight. This amount can be less than 10 % or less than 5 % by weight and even 0 %. Their dry extract weight preferably represents less than 30 % of the dry extract weight of the composition, more preferably less than 20 %, 15 %, 10 %, and 5 %. This amount can also be 0 %. Examples of such compounds are mono-oxetane compounds such as 3-ethyl-3-hydroxymethyloxetane.

The heat-curable composition comprises at least 50 %, preferably at least 60 %, more preferably at least 75, 80, 85, 90, 95 or 100 % by weight of compounds having at least one epoxy group (preferably compounds (a), (b), and (d) when present), relative to the total weight of polymerizable compounds (or epoxy compounds) present in the composition.

The heat-curable composition according to the invention preferably comprises less than 25 % by weight relative to the total weight of the composition, more preferably less than 20 % by weight, of acrylic and/or methacrylic monomers, and more preferably of non-epoxy containing monomers. This amount can be less than 10 % or less than 5 % by weight and even 0 %. In other words, in an embodiment, the composition is devoid of any non epoxy functional monomers.

The dry extract weight of acrylic and/or methacrylic monomers preferably represents less than 30 % of the dry extract weight of the composition, more preferably less than 25 %, 20 %, 10 %, 5 %. This amount can also be 0 %. These amounts also preferably apply to non-epoxy containing monomers.

The dry extract weight can be calculated as a theoretical dry extract weight as disclosed in US 2012/0295084 or EP614957.

The dry extract weight can also be experimentally obtained. The dry extract of a compound or composition is the total weight of the compound or composition after the full removal of volatile solvent(s) at 100°C to 110°C in an oven. The dry extract is also called solids content, percent nonvolatile material by weight or %NVM. Traditional procedures to determine solids take 60 min at 105°C to 110°C in an oven, and require both pre- and post- weighing of the sample pan and sample (ASTM designations: D2369 and D2926-80). The new procedures using the commercial Mark 3 solids analyzer purchased from Sartorius, or SMART Turbo™ purchased from CEM, take only 2 to 10 minutes, depending on the volatile/moisture content and viscosity of the material.

The composition according to the invention generally contains 25-75 % by weight of solids (dry extract weight relative to the weight of the composition), preferably from 35 to 55 %.

The compositions of the present invention advantageously further contain small amounts, preferably from 0.005 to 1 % by weight, based on the total weight of the composition, of at least one surface active compound (surfactant), more preferably from 0.02 to 0.5 %, still more preferably from 0.05 to 0.3 %. The surfactant is important for good wetting of the substrate resulting in satisfactory cosmetics of the final coating. Said surfactant can include for example poly(alkylene glycol)-modified polydimethylsiloxanes or polyheptamethylsiloxanes, or fluorocarbon-modified polysiloxanes. Preferred surfactants are fluorinated surfactant such as Novec® FC-4434 from 3M (non ionic surfactant comprising fluoroaliphatic polymeric esters), Unidyne™ NS-9013, and EFKA® 3034 from CIBA (fluorocarbon-modified polysiloxane).

The epoxy compounds of the composition are submitted to a polycondensation and/or cross-linking reaction in the presence of an epoxy ring-opening catalyst (compound (c)). Preferred catalysts found to be able to cure the epoxy composition at temperatures low enough (preferably ≤ 125°C, more preferably ≤ 110°C) not to damage the underlying substrate or cause adverse affects to other coatings or coating components includes (strong) acid catalysts, ammonium salts of metal anions and aluminum-based compounds, designed for ring opening polymerization of cyclic ether groups.

In order to obtain storage-stable heat curable compositions, the catalyst should not catalyze the epoxy ring-opening at room temperature, to prevent premature polymerization or formation of pre-polymers in the coating compositions with time during storage or while in production, thus extending the pot-life and shelf-life thereof without evolution of performance with time. In this regard, the catalyst is preferably a blocked catalyst or a latent catalyst (such as a buffered acid catalyst), blocked catalyst being preferred as latent catalysts may still react at ambient temperature and cause the composition to slightly evolve with time. Blocked catalysts will not react until reaching their respective deblocking temperatures. The preferred catalysts are inactive at ambient temperature (20°C) and activated to catalyze epoxy ring-opening only upon heating, generally to 70-80°C or more.

Exemplary blocked or latent catalysts are based on trifluoromethanesulfonic acid (triflic acid), dinonylnaphthalene sulfonic acid, dinonylnaphthalene disulfonic acid (DNNDSA), and/or metal salts thereof, and ammonium antimony hexafluoride (a Lewis acid), and are available from King Industries for example Nacure® Super A233 (diethylamine salt of trifluoromethanesulfonic acid), Nacure® 155 (a blocked acid catalyst based on DNNDSA), Nacure® Super XC-7231 (now sold under the name K-Pure® CXC 1612, blocked ammonium antimony hexafluoride catalysts), and Nacure® Super XC-A218 (25% solids) (now sold under the name K-Pure® CXC-1613), metal salt of triflic acid, Lewis acid, buffered to reduce its reactivity at ambient temperature), the latter being one of the preferred catalysts. Other useful catalysts include carboxylic acid anhydrides such as hexahydrophthalic anhydride, methylhexahydrophthalic anhydride, or Lewis acid catalysts including $BF_3$ and $BCl_3$ amine complexes.

In another embodiment, catalyst (c) is chosen from aluminum chelates, aluminum acylates and aluminum alcoholates. The composition does preferably not contain other epoxy ring-opening catalysts such as acid catalysts or ammonium salts of metal anions when those aluminum compounds are employed.

Further, aluminum based catalysts cure the present compositions at lower temperatures and in shorter time than the other catalysts cited above (pre-curing and post-curing).

Aluminum acylates and aluminum alcoholates are of preferred general formulae $Al(OC(O)R)_n(OR')_{3-n}$ and $Al(OSiR''_3)_n(OR')_{3-n}$, wherein R and R' are linear or branched chain alkyl groups containing from 1 to 10 carbon atoms, R" is a linear or branched chain, alkyl group containing from 1 to 10 carbon atoms, a phenyl moiety, an acylate moiety of formula OC(O)R, wherein R is as defined just hereabove, and n is an integer from 1 to 3. Preferably, R' is an isopropyl or ethyl group, R and R" are methyl groups.

Aluminum chelates may be formed by reacting an aluminum alcoholate or acylate with chelating agents free from nitrogen or sulfur, comprising oxygen as a coordinating atom, for example acetylacetone, ethyl acetoacetate or diethyl malonate. They may be chosen from aluminum acetylacetonate noted $Al(AcAc)_3$, ethyl mono(acetoacetate) aluminum bisacetylacetonate, ethyl bis(acetoacetate) aluminum monoacetyl acetonate, di-n-butoxy aluminum ethyl mono(acetoacetate) and di-i-propoxy aluminum ethyl mono(acetoacetate). Other examples of such compounds are given in the patent EP 0614957. When the epoxy ring-opening catalyst is an aluminum chelate, the coating composition preferably comprises an organic solvent which boiling temperature at the atmospheric pressure does range from 70 to 140°C, for example ethanol, isopropanol, ethyl acetate, methylethylketone or tetrahydropyrane.

The catalyst is generally used in amounts ranging from 0.01-5 % by weight based on the weight of the composition, preferably from 0.1 to 3.5 % by weight, more preferably from 0.2 to 3 % by weight.

The composition generally contains at least one solvent, which is preferably a glycol monoether. The glycol monoether solvent generally exhibits low surface tensions and is preferably selected from alkylene glycol C1-4 alkyl monoethers, more preferably from ethylene glycol C1-4 alkyl monoethers, propylene glycol C1-4 alkyl monoethers, diethylene glycol C1-4 alkyl monoethers, triethylene glycol C1-4 alkyl monoethers, propylene glycol C1-4 alkyl monoethers, dipropylene glycol C1-4 alkyl monoethers, triethylene glycol C1-4 alkyl monoethers, and tripropylene glycol C1-4 alkyl monoethers. The most preferred glycol monoether is propylene glycol methyl ether. Such a compound is sold commercially by Dow Chemical under the name Dowanol PM® as a mixture of 1-methoxy-2-propanol (major isomer) and 2-methoxy-1-propanol.

The total amount of solvents depends on the resins used, on the type of optical article and on the coating process. The purpose of the solvent is to achieve good surface wetting and a specific coating viscosity range determined by the coating equipment used to achieve a specific coating thickness range. The solvent typically represents from 25 to 75 % of the weight of the composition, preferably from 35 to 70 %, more preferably from 40 to 65 %. Low amounts of solvents, especially glycol monoethers, may not allow to satisfactorily solubilize dyes, which are generally hydrophobic compounds.

It has been found that glycol monoethers were required in the composition to provide good solubility to dyes that may be incorporated therein, longer shelf life for the coating solutions and to achieve better cosmetic properties for the resulting articles such as low haze. Due to the high solubility of dyes in the present sol-gel compositions, high levels of light protection can be achieved.

Additional solvents can be used, such as alkanols (methanol, ethanol, propanol... ketones, propylene carbonate or water. Hydrochloric acid that may be used as an acidic catalyst for compounds (b) counts as a solvent.

In one embodiment of the invention, the composition comprises from 30 to 55 % by weight relative to the total weight of the composition of monomers (a), (d) (if present) and compounds (b) and from 35 to 65 % by weight of at least one organic solvent selected from glycol monoethers, relative to the total weight of the composition.

The composition can also include at least one compound, or a hydrolyzate thereof, of formula $M(Z)_y$, wherein M represents a metal or a metalloid, preferably Si, the Z groups, being the same or different, are hydrolyzable groups and y, equal to or higher than 4, is the metal or metalloid M valence. Such compounds are described in detail in US 2011/0058142. The preferred compounds are compounds of formula $Si(Z)_4$, wherein the Z groups, being the same or different, are hydrolyzable groups, such as tetraethoxysilane.

According to the invention, the coating composition can comprise at least one absorbing dye as compound (h), which at least partially inhibits transmission of light in at least one selected wavelength range included within the 100-380 nm wavelength range (UV range), the 380-780 nm wavelength range (visible range), and/or the 780-1400 nm wavelength range (near infrared range). Said dye may refer to both a pigment and a colorant, i.e., can be insoluble or soluble in its vehicle. The dye can be water-based or (organic) solvent-based.

In a preferred embodiment, the selected spectral range within the 380-780 nm region of the electromagnetic spectrum is 400 nm to 500 nm, i.e., the blue wavelength range, more preferably the 415-455 nm range or the 420-450 nm range.

In the present disclosure, the (absorbing) dye will be referred to as a blue light blocking dye when the selected wavelength range is 400-500 nm, and is typically a yellow dye.

The optical article comprising a dye inhibits transmission of incident light through at least one geometrically defined surface of the substrate of the optical article, preferably an entire main surface. In the present description, unless otherwise specified, light blocking is defined with reference to an angle of incidence ranging from 0° to 15°, preferably 0°.

The dye preferably at least partially inhibits transmission of light within the 415-455 nm wavelength range by absorption, more preferably within the 420-450 nm range, in order to provide a high level of retinal cell protection against retinal cell apoptosis or age-related macular degeneration.

It may be particularly desirable in some cases to selectively filter a relatively small portion of the blue spectrum, i.e., the 420 nm - 450 nm region. Indeed, blocking too much of the blue spectrum can interfere with scotopic vision and mechanisms for regulating biorhythms, referred to as "circadian cycles". Thus, in a preferred embodiment, the dye blocks less than 5 % of light having a wavelength ranging from 465 to 495 nm, preferably from 450 to 550 nm. In this embodiment, the dye selectively inhibits the phototoxic blue light and transmits the blue light implicated in circadian rhythm. Preferably, the optical article transmits at least 95 % of light having a wavelength ranging from 465 to 495 nm. This transmittance is an average of light transmitted within the 465-495 nm range that is not weighted according to the sensitivity of the eye at each wavelength of the range. In another embodiment, the dye does not absorb light in the 465-495 nm range, preferably the 450-550 nm range. In the present description, unless otherwise specified, transmittances/transmissions are measured at the center of the optical article for a thickness ranging from 0.5 to 2.5 mm, preferably 0.7 to 2.0 mm, more preferably 0.8 to 1.5 mm, at an angle of incidence ranging from 0° to 15°, preferably 0°.

In one embodiment, the dye does not absorb, or very little, in regions of the visible spectrum outside the selected wavelength range, preferably the 400-500 nm wavelength range, to minimize the appearance of a plurality of colors. In this case, the dye selectively inhibits transmission of light within the selected wavelength range, preferably the 400-500

nm wavelength range, more preferably in the 415-455 nm or 420-450 nm ranges. As used herein, a dye "selectively inhibits" a wavelength range if it inhibits at least some transmission within the specified range, while having little or no effect on transmission of wavelengths outside the selected wavelength range, unless specifically configured to do so.

The dye preferably has an absorption peak, ideally a maximum absorption peak, within the 380-780 nm range, more preferably the 400-500 nm range. Certain dyes are interesting in that they have a narrow absorption peak, thus providing selective absorption filters having a bandwidth in some cases of for example 20 nm or less in the selected range of wavelengths. The selectivity property may be in part provided by the symmetry of the dye molecule. Such selectivity helps to limit the distortion of the visual perception of color, to limit the detrimental effects of light filtering to scotopic vision and to limit the impact on circadian rhythm.

The dyes according to the invention are generally compatible with most coating components. They are processed in a way such that they are well and stably distributed or dispersed in the matrix of the coating, providing transparent clear optical articles with low haze.

The chemical nature of this dye is not particularly limited, provided that it has an absorption peak, ideally a maximum absorption peak, within the 400-500 nm range.

In certain embodiments, the dye comprises one or more porphyrins, porphyrin complexes, other heterocycles related to porphyrins, including corrins, chlorins and corphins, derivatives thereof, or the perylene, coumarin, acridine, indolenin (also known as 3H-indole), anthraquinone, azobenzene, phthalocyanine, cyanines, quinoline, benzotriazole, nitrobenzene, isoquinoline, isoindoline, diarylmethane and indol-2-ylidene families. Derivatives are substances generally issued by an addition or substitution. The preferred dyes are diarylmethane dyes such as auramine O and porphyrin dyes.

The dye may include one or more dyes from the group consisting of: coumarin 343; coumarin 314; nitrobenzoxadiazole; lucifer yellow CH; 9,10-bis(phenylethynyl)anthracene; proflavin; 4-(dicyanomethylene)-2-methyl-6-(4-dimethyl aminostyryl)-4H-pyran; 2-[4-(dimethylamino)styryl]-1-methypyridinium iodide, lutein, zeaxanthin, LUMOGEN® F Yellow 083, T890, and yellow dyes having a narrow absorption peak available from Exciton Inc. such as ABS-419®, ABS-420®, ABS-425® or ABS-430®.

The amount of dye used in the present invention is an amount sufficient to provide a satisfactory inhibition of light within the 100-380 nm, 380-780 nm and/or 780-1400 nm wavelength range. For example the dye can be used at a level of 0.005 to 0.50 % or 0.01 to 0.2 % based on the weight of the coating composition, depending on the strength of the dye and the amount of inhibition/protection desired. It should be understood that the invention is not limited to these ranges, which are only given by way of example.

In one embodiment, the composition further comprises at least one color balancing agent and/or optical brightener in order to obtain an optical article having a cosmetically acceptable appearance for the wearer/user and when viewed by an external observer, in particular perceived as mostly color neutral. Indeed, blue light blocking means such as dyes or specific UV absorbers that can be present in the polymerizable composition tend to produce a color tint in the optical article as a "side effect", the latter appearing yellow, brown or amber if no color balancing means is employed.

In the present invention, the color balancing agent used to at least partially offset undesirable yellow color is preferably a bluing agent, i.e., a compound having an absorption band in the visible light spectrum in the orange to yellow wavelength region and manifesting a color from blue to violet. Color balancing agents are extensively described in WO 2017/077358, in the name of the applicant.

More details concerning this embodiment, such as the arrangement of the color-balancing component relative to a system blocking blue light wavelengths, and further exemplary systems including a blue light blocking component and a color-balancing component can be found e.g. in US 8,360,574, WO 2007/146933, WO 2015/097186, WO 2015/097492.

The color balancing component is generally used in an amount sufficient to adjust the hue of the optical material, typically from 0.01 to 5 % by weight, more preferably from 0.02 to 2 %, even more preferably from 0.03 to 0.5 %, relative to the weight of the coating composition.

The optical article of the invention limits or avoids the photo-degradation of optical filtering means such as dyes that are generally sensitive to light and heat, in particular UV light.

The heat-curable composition comprises at least one compound (e), which is a hindered amine light stabilizers (HALS), comprising at least two groups having the following formula:

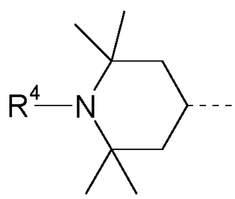

in which $R^4$ represents a hydrogen atom, an alkyl group, preferably a C1-C6 alkyl group, an alkoxy group, preferably a C1-C12 alkoxy group, or an oxyl group. The dotted line shows where the group is connected.

Specific examples of alkyl groups include methyl and ethyl groups. Specific examples of alkoxy groups include cyclohexyloxy, n-undecanoxy and n-octyloxy groups. The preferred $R^4$ groups are H, methyl and cyclohexyloxy.

In one embodiment, compound (e) comprises at least two (1,2,2,6,6-pentamethyl-4-piperidyl)- groups. In another embodiment, compound (e) comprises at least two (2,2,6,6-tetramethyl-4-piperidyl)- groups.

In another embodiment, compound (e) is a compound of formula:

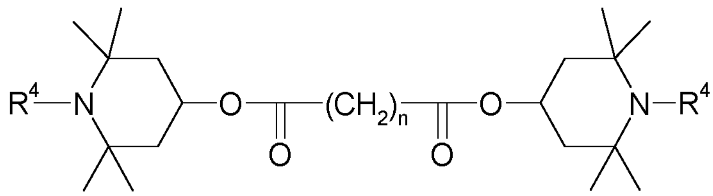

in which $R^4$ has been defined previously and n represents an integer ranging from 4 to 12, preferably from 5 to 10, and ideally equal to 8.

Preferred hindered amine light stabilizers are malonate, sebacate or triazine derivatives, such as bis(1,2,2,6,6-pentamethyl-4-piperidinyl)-2-n-butyl-(3,5-di-tert-butyl-4-hydroxybenzyl)malonate (Tinuvin® 144 from BASF), bis(1,2,2,6,6-pentamethyl-4-piperidyl) sebacate (present in Tinuvin® 292 from BASF, JF-95 from Johoku Chemical), 2,4-bis[N-butyl-N-(1-cyclohexyloxy-2,2,6,6-tetramethylpiperidin-4-yl)amino]-6-(2-hydroxyethylamine)-1,3,5-triazine (Tinuvin® 152 from BASF), bis(2,2,6,6-tetramethyl-4-piperidinyl) sebacate (Tinuvin® 770 from BASF, Lowilite 77 from Chemtura), bis(1-octyloxy-2,2,6,-tetramethyl-4-piperidyl) sebacate (present in Tinuvin® 123 from BASF), bis(2,2,6,6-tetramethyl-4-piperidyl-1-oxyl) sebacate, Tinuvin® 622 from BASF (butanedioic acid dimethylester polymer of 4-hydroxy-2,2,6,6-tetramethyl-1-piperidine ethanol), tetrakis(1,2,2,6,6-pentamethyl-4-piperidyl) butane-1,2,3,4-tetracarboxylate (ADK STAB LA-52 from Adeka), tetrakis(2,2,6,6-tetramethyl-4-piperidyl) butane-1,2,3,4-tetracarboxylate (ADK STAB LA-57 from Adeka), and bis(1-undecanoxy-2,2,6,6-tetramethylpiperidin-4-yl)carbonate (ADK STAB LA-81 from Adeka).

Compound (e) imparts protection against photo-degradation to the resulting optical articles and acts as a light stabilizer. Indeed, most of the dyes and in particular yellow dyes that may be present are sensitive to UV light, with certain levels of photo-degradation after irradiation with UV light. The present coating compositions exhibit low yellow color evolution over time.

Compound (e) also has unexpected benefits on the epoxy coating composition stability, as shown in the experimental part. The coating composition according to the invention shows dramatically improved storage or pot life stability.

The HALS is generally used in an amount ranging from 0.05 to 3 % by weight, more preferably from 0.07 to 2 %, even more preferably from 0.1 to 1 %, relative to the weight of the coating composition.

In one embodiment of the invention, the composition further comprises at least one antioxidant (g), which imparts protection against thermal oxidation.

Preferred antioxidants are sterically hindered phenols, thioethers or phosphites, preferably sterically hindered phenols. They are commercially available from BASF under the trade names Irganox® and Irgafos®.

The antioxidant is generally used in an amount ranging from 0.05 to 5 % by weight, more preferably from 0.1 to 2 %, even more preferably from 0.2 to 1 %, relative to the weight of the coating composition.

Free radical scavengers inhibit the formation of or scavenge the presence of free radicals, and include hindered amine light stabilizers (HALS) and antioxidants. The combination of both free radical scavengers, i.e., a combination of an antioxidant (g) with a HALS compound (e), offers the best protection from thermal and photo-degradation to optical filtering means. The amount of free radical scavengers that are used is an amount that is effective to stabilize the coating composition, which will depend on the specific compounds chosen and can be easily adapted by those skilled in the art.

Protection of optical filtering means from photo-degradation can also be reinforced by the presence on the optical article of an antireflection coating containing at least one mineral/dielectric layer.

In one embodiment of the invention, the composition further comprises at least one UV absorber (f) in order to reduce or prevent UV light from reaching the retina (in particular in ophthalmic lens materials), but also to protect the substrate material itself, thus preventing it from weathering and becoming brittle and/or yellow. Said UV absorber also limits or even eliminates photo-degradation of dyes and absorbers contained in the substrate. It can also be incorporated into a coating present at the surface of the optical article.

The UV spectrum has many bands, especially UVA, UVB and UVC bands. Amongst those UV bands reaching the earth surface, UVA band, ranging from 315 nm to 380 nm, and UVB band, ranging from 280 nm to 315 nm, are particularly harmful to the retina.

The UV absorber that may be used in the present invention preferably has the ability to at least partially block light having a wavelength shorter than 400 nm, preferably UV wavelengths below 385 or 390 nm.

Most preferred ultraviolet absorbers have a maximum absorption peak in a range from 350 nm to 370 nm and/or do not absorb light in the 465-495 nm range, preferably the 450-550 nm range. In one embodiment, the UV absorber does not absorb any substantial amount of visible light.

In a preferred embodiment, the UV absorber has the ability to at least partially cut blue light, and thus presents an absorption spectrum extending to a selected wavelength range within the visible blue light range of the electromagnetic spectrum (400-500 nm region), in particular the wavelength band with an increased dangerousness, i.e., the 415-455 nm range, preferably the 420-450 nm range.

Suitable UV absorbers include without limitation substituted benzophenones such as 2-hydroxybenzophenone, substituted 2-hydroxybenzophenones disclosed in U.S. Pat. No. 4,304,895, 2-hydroxy-4-octyloxybenzophenone (Seesorb 102®) 2,7-bis(5-methylbenzoxazol-2-yl)-9,9-dipropyl-3-hydroxyfluorene, 1,4-bis(9,9-dipropyl-9H-fluoreno [3,2-d] oxazol-2-yl)-2-hydroxyphenyl, hydroxyphenyl-triazines such as 2-hydroxyphenyl-s-triazines and benzotriazoles compounds such as hydroxyphenyl benzotriazoles.

The UV absorber is preferably a benzotriazole compound. Suitable UV absorbers from this family include without limitation 2-(2-hydroxyphenyl)-benzotriazoles such as 2-(2-hydroxy-3-t-butyl-5-methylphenyl) chlorobenzotriazole, n-octyl-3-[3-tert-butyl-4-hydroxy-5-(5-chloro-2H-benzotriazol-2-yl)phenyl] propionate (Eversorb 109®), 2-(2'-hydroxy-5'-t-octylphenyl) benzotriazole, 2-(3'-methallyl-2'-hydroxy-5'-methyl phenyl) benzotriazole or other allyl hydroxymethylphenyl benzotriazoles, 2-(2-hydroxy-5-methylphenyl)-2H-benzotriazole (Seesorb® 701), 2-(3,5-di-t-amyl-2-hydroxyphenyl) benzotriazole, and the 2-hydroxy-5-acryloxyphenyl-2H-benzotriazoles disclosed in U.S. 4,528,311. Preferred UV absorbers are of the benzotriazole family. Commercially available products include Tinuvin® and Chimassorb® compounds from BASF such as Tinuvin® 326, Tinuvin® 477, Tinuvin® 479, Tinuvin® 1130, Seesorb® 701 and 703 from Shipro Kasei Kaisha, Viosorb 550® from Kyodo Chemicals, and Kemisorb 73® from Chemipro and TCP Tinuvin Carbo Protect from BASF.

The UV absorbers are preferably used in an amount representing from 0.05 to 5 % of the weight of the composition, and preferably from 0.1 to 2.5 %, more preferably from 0.2 to 2 %.

The coating composition can further include particles of at least one metal oxide or metalloid oxide (filler) to increase the hardness of the coating, and optionally adapt the refractive index of the resulting coating, for example silica. They are preferably used under a colloidal form. More details concerning this embodiment can be found in

The composition can also include various additives such as curing/cross-linking agents (e.g. silane coupling agents or co-monomers such as polyamines, polythiols, polyols, polycarboxylic acids), internal mold release agents (described, e.g., in US 2014/252282), rheology modifiers, flow and leveling additives, wetting agents, antifoaming agents, and stabilizers. The composition can be a solution or a dispersion.

The invention also relates to a process to manufacture an optical article comprising:

(i) depositing on at least one main surface of the substrate of the optical article a heat-curable composition according to the invention,

(ii) heating the optical article coated with said heat-curable composition to a temperature higher than or equal to 60°C so as to form a tack-free coating,

(iii) heating the optical article coated with said tack-free coating to a temperature higher than or equal to the temperature of step (ii) so as to obtain a completely cured coating.

The epoxy coating of the invention is formed on the substrate of the optical article and can be in direct contact with said substrate. In another embodiment, at least one coating is interleaved between the substrate and the present epoxy coating.

The deposition is generally carried out by spin coating, dip coating, spray coating, 3D printing, roll-to-roll coating, or inkjet printing, preferably by dip coating or spin coating, and more preferably by dip coating. The excellent storage stability and good viscosity performance of the heat curable compositions allow coating of optical articles by simply dipping them into a bath containing the heat-curable composition.

Curing the heat-curable composition is generally performed in two steps, a first pre-curing step (partial curing, step (ii)) to a temperature of at least 60°C, preferably at least 70°C, more preferably at least 75°C, typically from 60°C to 100°C or from 75°C to 90°C, generally for at least 5 minutes, preferably from 10 to 25 or 30 minutes, typically 15 minutes, so as to form a tack-free coating (to the touch), and a second step of heating the optical article coated with the tack-free coating to a temperature higher than or equal to the temperature of the pre-curing step (post-curing step (iii)), preferably at least 90°C or 95°C, more preferably at least 100°C, typically from 100 to 140°C, preferably from 100 to 115°C, for 1 to 4 hours, generally at least two hours, preferably for 2.5 to 3.5 hours, typically 3 hours, so as to obtain a higher level of curing, preferably a completely cured coating. The process leads to transparent clear coatings with low haze.

The thickness of the cured coating may be adapted to the specific application required and generally ranges from 0.5 to 50 μm, preferably from 1 to 20 μm, more preferably from 2 to 10 μm. The coating thickness can be easily adjusted by modifying the solvent concentration of the claimed compositions and the coating conditions, for example the withdrawal speed in case of deposition by dip coating. The longer the withdrawal time, the thinner will be the final dry coating.

The substrate's main surface can be coated with several functional coating(s) to improve its optical and/or mechanical properties. The term "coating" is understood to mean any layer, layer stack or film which may be in contact with the substrate and/or with another coating, for example a sol-gel coating or a coating made of an organic resin. A coating may be deposited or formed through various methods, including wet processing, gaseous processing, and film transfer. The functional coatings used herein can be selected from, without limitation to these coatings, an impact-resistant coating, an abrasion-resistant and/or scratch-resistant coating, an antireflection coating, a polarized coating, a photochromic coating, an antistatic coating, an antifouling coating (hydrophobic and/or oleophobic coating), an antifog coating, a precursor of an antifog coating or a stack made of two or more such coatings.

The primer coatings improving the impact resistance and/or the adhesion of the further layers in the end product are preferably polyurethane latexes or acrylic latexes. Primer coatings and abrasion-resistant and/or scratch-resistant coatings may be selected from those described in the application WO 2007/088312.

Abrasion- and/or scratch-resistant coatings (hard coatings) are preferably hard coatings based on poly(meth)acrylates or silanes. Recommended hard abrasion- and/or scratch-resistant coatings in the present invention include coatings obtained from silane hydrolyzate-based compositions (sol-gel process), in particular epoxysilane hydrolyzate-based compositions such as those described in the US patent application US 2003/0165698 and in US 4,211,823 and EP614957.

The antireflection coating may be any antireflection coating traditionally used in the optics field, particularly ophthalmic optics. As is also well known, antireflection coatings traditionally comprise a monolayered or a multilayered stack composed of dielectric materials (generally one or more metal oxides) and/or sol-gel materials and/or organic/inorganic layers such as disclosed in WO 2013/098531. These are preferably multilayered coatings, comprising layers with a high refractive index (HI) and layers with a low refractive index (LI).

The structure and preparation of antireflection coatings are described in more details in patent application WO 2010/109154, WO 2011/080472 and WO 2012/153072.

The antifouling top coat is preferably deposited onto the outer layer of the antireflective coating. As a rule, its thickness is lower than or equal to 10 nm, does preferably range from 1 to 10 nm, more preferably from 1 to 5 nm. Antifouling top coats are generally coatings of the fluorosilane or fluorosilazane type, preferably comprising fluoropolyether moieties and more preferably perfluoropolyether moieties. More detailed information on these coatings is disclosed in WO 2012076714.

Coatings such as primers, hard coats, antireflection coatings and antifouling coatings may be deposited using methods known in the art, including spin-coating, dip-coating, spray-coating, evaporation under vacuum, sputtering, chemical vapor deposition and lamination.

In an embodiment, the process comprises forming on the substrate the epoxy coating according to the invention, an impact-resistant coating, an abrasion-resistant and/or scratch-resistant coating, and optionally an antireflection coating and an antifouling coating. The epoxy coating can also be applied in different coating configurations to maintain or improve general coating performances while still showing low haze and good adhesion, such as forming on the substrate a polyurethane reactive hot-melt adhesive (optional), the epoxy coating according to the invention, an impact-resistant coating, an abrasion-resistant and/or scratch-resistant coating and an antireflection coating (optional). In one embodiment, the present epoxy coating is interleaved between an impact-resistant coating and an abrasion-resistant and/or scratch-resistant coating.

As the present epoxy coating provides caustic resistance, it can also be used as an external layer deposited directly onto the substrate or functional coatings. In another embodiment, it is used as a protective coating to protect against scratches or similar cosmetic defects resulting from physical handling an underlying layer or substrate such as a photochromic layer, as disclosed in WO 2011/075128 or US 6,268,055.

The coatings are preferably directly deposited on one another. These coatings can be deposited one by one, or a stack of one or more coatings can be formed on the substrate, for example by lamination.

In one embodiment, the present optical article is prepared by forming on the substrate the epoxy coating in a first manufacturing site, while the other coatings are formed in a second manufacturing site.

The coating according to the invention has improved color properties, especially when it is color-balanced, which can be quantified by the yellowness index YI. The degree of whiteness of the inventive coating may be quantified by means of colorimetric measurements, based on the CIE tristimulus values X, Y, Z such as described in the standard ASTM E313 with illuminant C observer 2°. The optical material forming the coating according to the invention preferably has a low yellowness index YI, i.e., lower than 10, more preferably lower than 5, as measured according to the above standard. The yellowness index YI is calculated per ASTM method E313 through the relation YI = (127.69 X - 105.92

Z)) / Y, where X, Y, and Z are the CIE tristimulus values.

The optical article according to the invention preferably has a relative light transmission factor in the visible spectrum Tv higher than or equal to 85 or 87 %, preferably higher than or equal to 90 %, more preferably higher than or equal to 92 %, and better higher than or equal to 95 %. Said Tv factor preferably ranges from 87 % to 98.5 %, more preferably from 88 % to 97 %, even better from 90 % to 96 %. The Tv factor, also called "luminous transmission" of the system, is such as defined in the standard NF EN 1836 and relates to an average in the 380-780 nm wavelength range that is weighted according to the sensitivity of the eye at each wavelength of the range and measured under D65 illumination conditions (daylight).

The following examples illustrate the present invention in a more detailed, but nonlimiting manner. Unless stated otherwise, all thicknesses disclosed in the present application relate to physical thicknesses. The percentages given in the tables are weight percentages. Unless otherwise specified, the refractive indexes referred to in the present invention are expressed at 25°C at a wavelength of 550 nm.

## EXAMPLES

### 1. Materials

The optical articles used in the examples comprise an ORMA® lens substrate from ESSILOR, having a 65 mm diameter, a refractive index of 1.50, a power of -2.00 diopters and a thickness of 1.2 mm.

Various coating compositions of epoxy copolymers were prepared and are shown in the tables below. The compositions comprise at least one non silicon-containing bi- or tri-functional epoxy monomer comprising two or three epoxy groups (compound (a)), γ-glycidoxypropyltrimethoxysilane (from Evonik Industries) as compound (b) pre-hydrolyzed with 0.10 N HCl, a metal chelate catalyst (compound (c), aluminum acetylacetonate, $Al(AcAc)_3$), a hindered amine light stabilizer (compound (e)), a surfactant (Novec® FC-4434, which is a non ionic surfactant comprising fluoroaliphatic polymeric esters, 25 % wt. in dipropylene glycol monomethyl ether, sold by 3M), Savinyl Blue RS (solvent soluble metal complex dye, color balancing dye provided by Clariant International Ltd.), ABS-420® blue light blocking yellow dye having a narrow absorption peak provided by Exciton Inc.), D&C Violet #2 (1-hydroxy-4-(p-tolylamino)anthracene-9,10-dione, color balancing dye provided by Sensient Corp.), propylene glycol methyl ether (Dowanol® PM from Dow Chemical Company) and methanol as a solvent.

The following hindered amine light stabilizer were used: Tinuvin® 144 (bis(1,2,2,6,6-pentamethyl-4-piperidinyl)2-n-butyl-(3,5-di-tert-butyl-4hydroxy-benzyl)malonate), Tinuvin® 292 (mixture of bis(1,2,2,6,6-pentamethyl-4-piperidyl)sebacate, and methyl(1,2,2,6,6-pentamethyl-4-piperidyl)sebacate), and Tinuvin® 152 (2,4-bis[N-butyl-N-(1-cyclohexyloxy-2,2,6,6-tetramethylpiperidin-4-yl)amino]-6-(2-hydroxyethylamine)-1,3,5-triazine), all available from BASF.

The following non silicon-containing bi- or tri-functional epoxy monomers comprising two or three epoxy groups were investigated (compounds (a)): Erisys™ GE-31 (trimethylolethane triglycidyl ether, abbreviated as GE-31, from CVC thermoset Specialties), Erisys™ GE-30 (trimethylolpropane triglycidyl ether, abbreviated as GE-30, from CVC thermoset Specialties) and Cyracure® UVR-6110 (3',4'-epoxycyclohexylmethyl-3,4-epoxycyclohexanecarboxylate, abbreviated as UVR-6110, cycloaliphatic diepoxy compound from Dow Chemical).

The following non silicon-containing polyfunctional epoxy monomer comprising from 4 to 8 epoxy groups was used in some examples (compound (d)): Erisys™ GE-60 (sorbitol polyglycidyl ether, abbreviated as GE-60, from CVC thermoset Specialties).

Other optional compounds can be included in some compositions, such as Irganox® 245 (Triethylene glycol bis(3-tert-butyl-4-hydroxy-5-methylphenyl)propionate, antioxidant available from BASF), and UV absorbers from BASF such as Tinuvin® 477 (hydroxylphenyl triazine), Tinuvin® 479 (hydroxylphenyl triazine) or Tinuvin® 1130 (hydroxylphenyl triazole).

The structures of some of the various epoxy compounds and hindered amine light stabilizers that have been used are recalled hereunder:

| Epoxy compound | Glymo | Erisys™ GE-31 | Erisys™ GE-60 | UVR-6110 |
|---|---|---|---|---|
| Structure | 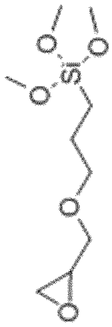 | 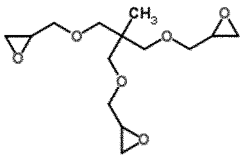 | 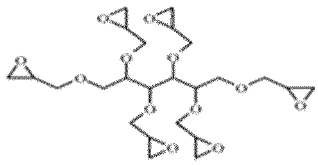 or 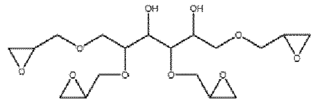 | 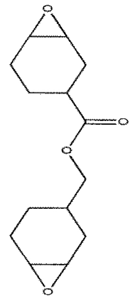 |

| Erisys™ GE-30 | Tinuvin® 144 | Tinuvin® 292 | Tinuvin® 152 |
|---|---|---|---|
| 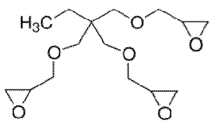 | 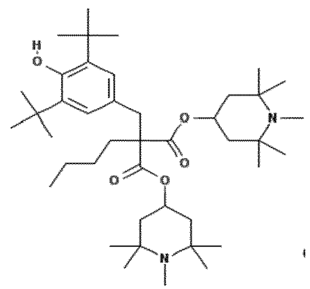 | 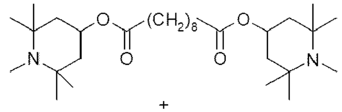 + 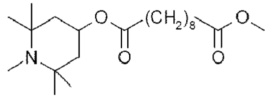 | 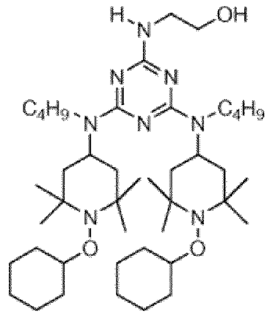 |

2. Evaluation of the coating performances and composition stability

a) Abrasion resistance and haze of the coatings were determined as disclosed in WO 2012/173596. Specifically, abrasion resistance was measured by means of the sand Bayer test, in accordance with the ASTM F735-81 standard. Haze was measured on a Haze-Gard XL-211 Plus apparatus from BYK-Gardner in accordance with the standard ASTM D1003-00. As haze is a measurement of the percentage of transmitted light scattered more than 2.5° from the axis of the incident light, the smaller the haze value, the lower the degree of cloudiness. Generally, for optical articles described herein, a haze value of less than or equal to 0.3 % is acceptable, more preferably of less than or equal to 0.2 %.

b) Protection from phototoxic blue light by the inventive coating can be evidenced by calculating the mean blue light protection factor BVC between 400 nm and 450 nm, weighted by the light hazard function B'(λ), based on the transmission spectrum. Such factor is defined through the following relation and measured at 0° incidence:

$$BVC = 100\% - \frac{\int_{400}^{450} B'(\lambda).T(\lambda).d\lambda}{\int_{400}^{450} B'(\lambda).d\lambda}$$

wherein T(λ) represents the lens transmission factor at a given wavelength, measured at an incident angle between 0 to 17°, preferably at 0°, and B'(λ) represents the light hazard function shown on figure 1 of publication WO 2017/077359, in the name of the Applicant (relative spectral function efficiency). Said light hazard function results from work between Paris Vision Institute and Essilor International. It can be seen on this figure that blue light is the most dangerous to human eye at 428-431 nm. A few values of the B'(λ) function between 400 and 450 nm are given hereunder:

| Wavelength (nm) | Weighting coefficient B'(λ) |
|---|---|
| 400 | 0.1618 |
| 410 | 03263 |
| 420 | 0.8496 |
| 430 | 1.00 |
| 440 | 0.6469 |
| 450 | 0.4237 |

c) The yellowness index YI of the prepared lenses was calculated as described above, by measuring on a white background with a Cary 4000 spectrophotometer from Hunter the CIE tristimulus values X, Y, Z such as described in the standard ASTM E 313-05, through reflection measures, with the front (convex) side of the lens facing the detector and light incoming on said front side. This way of measuring YI, from an observer's view angle, is the closest to the actual wearing situation.

Resistance of the inventive coating to photo-degradation was evaluated following exposure to the sun conditions of the Q-sun test. The Q-sun test consists in introducing the prepared articles in a Q-SUN® Xe-3 xenon chamber, reproducing full spectrum sunlight, purchased from Q-LAB, at a relative humidity of 20% (± 5%) and at a temperature of 23°C (± 5°C), and exposing their convex side to irradiation for 40h or 80h. The articles were measured by Cary 4000 spectrophotometer again to get a new YI parameter and YI loss caused by the Q-sun test.

d) A dry adhesion test, referred to as a crosshatch tape peel adhesion test, was performed on coated articles in accordance with ISTM 02-010, using 3M SCOTCH® n° 600 transparent tape, such as disclosed in US 7476415 and US 2014/037964, after they have been subjected to the Q-Sun test described above.

e) The pot life test procedures of the coating solution are described here.

The solid content of coating solutions is measured by Smart System 5 Microwave Moisture Analyzer, purchased from CEM Corporation. The Smart System 5 is set with the fixed procedure using 100% power and 100°C. A weighing paper is first placed on the microbalance to get dry in the chamber, then near 2 g of a testing solution is applied on top of the paper. After 2 minutes, the volatile/moisture content is dried out in the chamber and the rest of content is remained on the paper with the final solid percentage (%) shown up on the screen. Three measurements are conducted for each solution to get an average result.

The viscosity of coating solutions is recorded by the Programmable DV- II+ Viscometer, purchased from Brookfield Engineering Laboratories, Inc. A testing solution in the range of 15-20 grams is applied into a stainless steel tube with a selected spindle inside, then heated up to a constant temperature at 25°C in a VWR® Heated Circulating Bath. The rotational speed of the spindle is set to fit to the viscosity range, such as 30, 50, 60, or 100rpm that can produce a digital display reading between 10% and 100% torque. After about 5 minutes, the viscosity reading on the screen becomes constant, with small centipoise changes by time (±0.02), then this centipoise (cPs) value is recorded as the solution viscosity. Two to three measurements are conducted for each solution to get an average result.

The solid content (%) and viscosity of a testing solution are measured at one time on the first day (Day 1) when the solution is completely blended in an amber Nalgene container. The solution is then stirred continuously on the stirring stage and kept in the enclosed container at room temperature for 5 days (21-23°C with -50% humidity). On the sixth day (Day 6), the solid content (%) and viscosity of the testing solution are measured again.

3. Preparation, deposition and curing of the coating compositions

Epoxy compounds (a) and (d) (when present) were mixed in a Nalgene container. The solvents (Dowanol® PM and methanol) were added and the solution was allowed to stir for 60 minutes. The surfactant, dyes, compound (e) and optional components such as UV absorbers were added and the mixture allowed to mix for 30-60 more minutes.

Compound (b), typically Glymo, was mixed with 0.1N HCl for 0.5-1hrs, and then added to the other ingredients. An ultrasonication or agitation process was sometimes added to obtain more uniform solutions. $Al(AcAc)_3$ was added last (after adding the hydrolyzed Glymo to the epoxy/solvent/dye mixture).

Each of the coating compositions was deposited by dip coating both faces of an Orma® lens previously cleaned with diluted NaOH (500 rpm for 5s, then 1000 rpm for 10s) in the coating composition (at a withdrawal speed of 2.0-2.5 mm/s), except for coating compositions C4, C4-1 and C4-2, which were deposited by spin coating (400 rpm for 6 minutes, then 800 rpm for 10 minutes) on Orma® lenses previously cleaned using a corona treatment for 20-30 seconds, then rinsed by soap water and deionized water and dried in the air or by a lens dryer. A pre-curing step at 75-80°C generally for 20 minutes followed by a post-curing step at 100°C for 3 hours were then performed. The (dry) coating thicknesses were 4.5-5.5 μm.

The formulations prepared and the characterizations of these formulations are shown in the tables hereunder.

| Example | | C1 (comp) | C1-1 (comp) | C1-2 (comp) | C1-3 (comp) | C1-4 (comp) | C1-5 (comp) |
|---|---|---|---|---|---|---|---|
| Epoxy compound | (a) GE-30 (%) | 10.02 | 9.96 | 9.96 | 9.96 | 9.96 | 9.95 |
| | (a) UVR-6110 (%) | 26.72 | 26.56 | 26.56 | 26.56 | 26.56 | 26.54 |
| | (b) Glymo (%) | 4.71 | 4.68 | 4.68 | 4.68 | 4.68 | 4.68 |
| (c) $Al(AcAc)_3$ (%) | | 0.56 | 0.56 | 0.56 | 0.56 | 0.56 | 0.56 |
| Novec® FC-4434 (%) | | 0.2 | 0.2 | 0.2 | 0.2 | 0.2 | 0.2 |
| D&C Violet #2 | | 0.03 | 0.03 | 0.03 | 0.03 | 0.03 | 0.03 |
| ABS-420® | | 0.03 | 0.03 | 0.03 | 0.03 | 0.03 | 0.03 |
| Savinyl® Blue RS | | 0.04 | 0.04 | 0.04 | 0.04 | 0.04 | 0.04 |
| Dowanol® PM (%) | | 50.7 | 50.39 | 50.39 | 50.39 | 50.36 | 50.4 |
| Methanol | | 5.91 | 5.87 | 5.87 | 5.87 | 5.87 | 5.88 |
| HCl 0.1 N (%) | | 1.08 | 1.07 | 1.07 | 1.07 | 1.07 | 1.07 |
| HALS (%) | | 0 | 0 | 0 | 0 | 0 | 0.59 (e1) |
| UV absorber (%) | | 0 | 0.61 (f1) | 0.61 (f2) | 0 | 0.67 (f3) | 0 |
| Antioxidant (g1) | | 0 | 0 | 0 | 0.6 | 0 | 0 |
| **Pot-life study** | | | | | | | |
| **Viscosity (cPs)** | | | | | | | |
| Day1 | | 4.16 | 4.25 | 4.31 | 4.23 | 4.31 | 4.21 |
| Day6 | | 5.04 | 5.23 | 5.50 | 5.66 | 5.69 | 4.33 |
| $\Delta_{Viscosity}$ | | **0.88** | **0.98** | **1.19** | **1.43** | **1.38** | 0.12 |
| **Solid (wt%)** | | | | | | | |
| Day1 | | 42.54 | 42.31 | 43.06 | 42.70 | 42.15 | 41.59 |
| Day6 | | 43.94 | 43.65 | 44.88 | 44.75 | 44.75 | 42.25 |
| $\Delta_{Solid}$ | | **1.40** | **1.34** | **1.83** | **2.05** | **2.60** | 0.66 |

(f1) Tinuvin® 477 (UV absorber). (e1) Tinuvin® 144 (HALS). (f2) Tinuvin® 479 (UV absorber). (f3) Tinuvin® 1130 (UV absorber). (g1) Irganox® 245 (antioxidant).

| Example | | C1-6 (comp) | C1-7 (comp) | C1-8 | C1-9 | C1-10 | C1-11 |
|---|---|---|---|---|---|---|---|
| Epoxy compound | (a) GE-30 (%) | 9.96 | 9.9 | 9.92 | 9.9 | 10 | 10 |
| | (a) UVR-6110 (%) | 26.56 | 26.40 | 26.44 | 26.41 | 26.67 | 26.65 |
| | (b) Glymo (%) | 4.68 | 4.65 | 4.66 | 4.7 | 4.7 | 4.7 |
| (c) $Al(AcAc)_3$ (%) | | 0.56 | 0.55 | 0.55 | 0.55 | 0.56 | 0.56 |
| Novec® FC-4434 (%) | | 0.2 | 0.20 | 0.20 | 0.20 | 0.20 | 0.20 |
| D&C Violet #2 | | 0.03 | 0.03 | 0.03 | 0.03 | 0.03 | 0.03 |
| ABS-420® | | 0.03 | 0.03 | 0.03 | 0.03 | 0.03 | 0.03 |
| Savinyl® Blue RS | | 0.04 | 0.04 | 0.04 | 0.04 | 0.04 | 0.04 |
| Dowanol® PM (%) | | 50.39 | 50.09 | 50.17 | 50.11 | 50.60 | 50.57 |
| Methanol | | 5.87 | 5.84 | 5.85 | 5.84 | 5.9 | 5.9 |
| HCl 0.1 N (%) | | 1.07 | 1.07 | 1.07 | 1.07 | 1.08 | 1.08 |
| HALS (%) | | 0.6 (e2) | 0 | 0.26 (e1) | 0.59 (e2) | 0.10 (e1) | 0.10 (e1) |
| UV absorber (%) | | 0 | 0.60 (f1) | 0.52 (f1) | 0.57 (f1) | 0 | 0.05 (f1) |
| Antioxidant (g1) | | 0 | 0.60 | 0.26 | 0 | 0.10 | 0.10 |
| **Pot-life study** | | | | | | | |
| **Viscosity (cPs)** | | | | | | | |
| Day1 | | 4.26 | 4.33 | 4.31 | 4.33 | 4.22 | 4.22 |
| Day6 | | 4.29 | 5.18 | 4.42 | 4.34 | 4.36 | 4.34 |
| Δ Viscosity | | 0.03 | **0.85** | 0.11 | 0.01 | 0.14 | 0.12 |
| **Solid (wt%)** | | | | | | | |
| Day1 | | 41.41 | 42.27 | 42.37 | 42.19 | 42.28 | 42.31 |
| Day6 | | 42.27 | 43.41 | 43.22 | 42.60 | 42.52 | 42.45 |
| Δ Solid | | 0.85 | **1.14** | 0.85 | 0.41 | 0.24 | 0.14 |

(f1) Tinuvin® 477 (UV absorber). (e1) Tinuvin® 144 (HALS). (e2) Tinuvin® 292 (HALS).

| Example | | C1-12 | C2 (comp) | C2-1 | C2-2 | C2-3 |
|---|---|---|---|---|---|---|
| Epoxy compound | (a) GE-30 (%) | 9.9 | 9.92 | 9.82 | 9.85 | 9.76 |
| | (a) UVR-6110 (%) | 26.40 | 26.45 | 26.17 | 26.27 | 26.05 |
| | (b) Glymo (%) | 4.65 | 4.66 | 4.61 | 4.63 | 4.59 |
| (c) $Al(AcAc)_3$ (%) | | 0.55 | 1.49 | 1.47 | 1.48 | 1.47 |
| Novec® FC-4434 (%) | | 0.20 | 0.20 | 0.20 | 0.20 | 0.20 |
| D&C Violet #2 | | 0.03 | 0 | 0 | 0 | 0 |
| ABS-420® | | 0.03 | 0 | 0 | 0 | 0 |
| Savinyl® Blue RS | | 0.04 | 0.04 | 0.04 | 0.04 | 0.04 |
| Dowanol® PM (%) | | 50.09 | 50.27 | 49.75 | 49.92 | 49.5 |
| Methanol | | 5.84 | 5.85 | 5.79 | 5.81 | 5.76 |
| HCl 0.1 N (%) | | 1.07 | 1.07 | 1.06 | 1.06 | 1.05 |
| HALS (%) | | 0.60 (e1) | 0 | 0.26 (e1) | 0.26 (e1) | 0.59 (e1) |
| UV absorber (%) | | 0.60 (f1) | 0 | 0.52 (f1) | 0.17 (f1) | 0.34 (f1) |
| Antioxidant (g1) | | 0 | 0 | 0.26 | 0.26 | 0.60 |
| **Pot-life study** | | | | | | |
| **Viscosity (cPs)** | | | | | | |
| Day1 | | 4.30 | 4.31 | 4.32 | 4.43 | 4.53 |
| Day6 | | 4.35 | 5.37 | 4.33 | 4.54 | 4.63 |
| $\Delta_{Viscosity}$ | | 0.05 | **1.06** | 0.01 | 0.11 | 0.10 |
| **Solid (wt%)** | | | | | | |
| Day1 | | 42.16 | 42.97 | 42.85 | 42.72 | 42.86 |
| Day6 | | 42.25 | 44.03 | 43.42 | 43.22 | 42.88 |
| $\Delta_{Solid}$ | | 0.09 | **1.07** | 0.56 | 0.50 | 0.02 |

(f1) Tinuvin® 477 (UV absorber). (e1) Tinuvin® 144 (HALS).

| Example | | C3 (comp) | C3-1 | C3-2 | C3-3 | C3-4 | C4 (comp) | C4-1 | C4-2 |
|---|---|---|---|---|---|---|---|---|---|
| Epoxy compound | (d) GE-60 (%) | 0 | 0 | 0 | 0 | 0 | 17.1 | 17.04 | 16.97 |
| | (a) GE-31 (%) | 9.90 | 9.88 | 9.88 | 9.86 | 9.79 | 8.06 | 8.03 | 8.00 |
| | (a) UVR-6110 (%) | 26.39 | 26.34 | 26.32 | 26.29 | 26.08 | 21.49 | 21.41 | 21.32 |
| | (b) Glymo (%) | 4.89 | 4.88 | 4.88 | 4.87 | 4.83 | 3.98 | 3.97 | 3.95 |
| (c) $Al(AcAc)_3$ (%) | | 1.48 | 1.48 | 1.48 | 1.47 | 1.46 | 1.21 | 1.2 | 1.2 |
| Novec® FC-4434 (%) | | 0.20 | 0.20 | 0.20 | 0.20 | 0.20 | 0.16 | 0.16 | 0.19 |
| D&C Violet #2 | | 0.03 | 0.03 | 0.03 | 0.03 | 0.03 | 0.02 | 0.02 | 0.02 |
| ABS-420® | | 0.03 | 0.03 | 0.03 | 0.03 | 0.03 | 0.02 | 0.02 | 0.02 |
| Savinyl® Blue RS | | 0.02 | 0.02 | 0.02 | 0.02 | 0.02 | 0.01 | 0.01 | 0.01 |
| Dowanol® PM (%) | | 50.15 | 50.05 | 50.02 | 49.95 | 49.57 | 40.8 | 40.64 | 40.46 |
| Methanol | | 5.84 | 5.83 | 5.83 | 5.82 | 5.77 | 4.75 | 4.73 | 4.72 |
| HCl 0.1 N (%) | | 1.12 | 1.12 | 1.12 | 1.12 | 1.11 | 0.91 | 0.91 | 0.90 |
| HALS (%) | | 0 | 0.1 (e1) | 0.1 (e1) | 0.2 (e1) | 0.6 (e1) | 0 | 0.3 (e3) | 0.6 (e3) |
| UV absorber (%) | | 0 | 0.1 (f1) | 0.05 (f1) | 0.19 (f1) | 0.56 (f1) | 1.49 (f2) | 1.25 (f2) | 1.37 (f2) |
| Antioxidant (g1) | | 0 | 0 | 0.10 | 0 | 0 | 0 | 0.30 | 0.30 |
| **Pot-life study** | | | | | | | | | |
| **Viscosity (cPs)** | | | | | | | | | |
| Day1 | | 4.10 | 4.55 | 4.19 | 4.57 | 4.45 | 8.38 | 8.57 | 8.66 |
| Day6 | | 5.09 | 4.98 | 4.49 | 4.74 | 4.51 | 9.25 | 8.65 | 8.71 |
| $\Delta_{Viscosity}$ | | **0.99** | 0.43 | 0.30 | 0.17 | 0.06 | **0.87** | 0.08 | 0.05 |
| **Solid (wt%)** | | | | | | | | | |
| Day1 | | 42.28 | 42.68 | 42.32 | 42.86 | 42.61 | 52.72 | 52.95 | 53.29 |
| Day6 | | 43.38 | 43.78 | 43.05 | 43.05 | 42.62 | 53.90 | 53.66 | 53.71 |
| $\Delta_{Solid}$ | | **1.10** | 1.10 | 0.73 | 0.19 | 0.01 | **1.18** | 0.71 | 0.42 |

(f1) Tinuvin® 477 (UV absorber). (e1) Tinuvin® 144 (HALS). (e3) Tinuvin® 152 (HALS).

Stability of the compositions

Four reference epoxy compositions showing poor stability were prepared (C1, C2, C3 and C4), to which one or more additives were added (HALS, UV absorbers and/or antioxidants).

The viscosity and solid weight content parameters of these compositions were recorded on the same day (day 1). Then each of these compositions was stirred continuously and kept in an enclosed plastic bottle at room temperature for 5 days (21-23°C with -50% humidity). Their viscosity and solid weight content parameters were recorded again on day 6.

A comparison of examples C1 and C1-1 to C1-6 shows that only HALS additives Tinuvin® 292 and Tinuvin® 144 improved the storage stability of the control composition C1. The viscosity increase between day 1 and day 6 is much lower ($\Delta_{Viscosity}$ <0.2 cPs vs. $\Delta_{Viscosity}$ = 0.88 for reference composition C1), while the solid weight increase (possibly due to polymerization) between day 1 and day 6 is lower. The other additives investigated (UV absorbers, antioxidants) either kept the evolution of the reference composition, or made the composition evolution even worse (examples C1-1 to C1-4).

In a second study, different HALS, UV absorbers and antioxidants were combined together and added to reference composition C1, to check how they affect the composition stability (pot-life). It was found that a combination of (HALS + UV absorber), (HALS + antioxidant) or (HALS + antioxidant + UV absorber) could achieve small increases of both of viscosity and solid content. It was noticeable that the addition of Tinuvin® 292 (HALS) dramatically stabilized the composition viscosity (($\Delta_{Viscosity}$ = 0.01 cPs) for the C1-8 composition.

These aging improvement effects were confirmed by adding the additives Tinuvin® 477, Tinuvin® 144, Tinuvin® 152 and Irganox® 245 in selected combinations in different reference compositions (C2, C3 and C4), which include a higher amount of catalyst (c).

Coating performances

Several coating configurations were tested to show that the present epoxy coatings can be used as intermediate functional layers in different coating configurations and maintain or improve general coating performances such as mechanical performances:

Configuration 1: lens / epoxy coating (without surrounding coatings).
Configuration 2: lens / epoxy coating / primer coating / hard coat.
Configuration 3: lens / epoxy coating / primer coating / hard coat / antireflection coating.

The primer coating (polyurethane) and hard coat (polysiloxane, refractive index: 1.5) were those used in the examples of WO 2013/013929 and deposited by dip coating. The antireflective coating was that of example 6 of the patent application WO 2008/107325. Said antireflection coating was deposited by evaporation under vacuum, comprises a 150 nm thick $SiO_2$ sub-layer and the stack $ZrO_2/SiO_2/ZrO_2$/ITO/$SiO_2$ (respective thicknesses of the layers: 29, 23, 68, 7 and 85 nm). An ITO layer is an electrically conductive layer of indium oxide doped with tin ($In_2O_3$:Sn).

The results are shown below.

| **Configuration** | **1** | **1** | **1** | **1** | **1** | **1** | **1** | **1** | **1** | **1** | **1** |
|---|---|---|---|---|---|---|---|---|---|---|---|
| Example | C1 | C1-11 | C1-12 | C2 | C2-3 | C3 | C3-3 | C3-4 | C4 | C4-1 | C4-2 |
| ASTM haze (%) | 0.1 | 0.1 | 0.1 | 0.2 | 0.1 | 0.2 | 0.1 | 0.1 | 0.1 | 0.1 | 0.1 |
| Sand Bayer | 0.8 | 0.9 | 0.6 | 0.9 | 0.7 | 0.9 | 0.8 | 0.6 | 0.7 | 0.6 | 0.6 |

| **Configuration** | **2** | **2** | **2** | **2** | **2** | **2** | **2** | **2** | **2** | **2** | **2** |
|---|---|---|---|---|---|---|---|---|---|---|---|
| Example | C1 | C1-11 | C1-12 | C2 | C2-3 | C3 | C3-3 | C3-4 | C4 | C4-1 | C4-2 |
| ASTM haze (%) | 0.1 | 0.1 | 0.1 | 0.1 | 0.1 | 0.2 | 0.1 | 0.1 | 0.1 | 0.1 | 0.1 |
| Sand Bayer | 3.8 | 3.9 | 3.8 | 3.9 | 4.0 | 4.0 | 3.9 | 3.9 | 3.9 | 3.9 | 3.8 |

| **Configuration** | **3** | **3** | **3** | **3** | **3** | **3** | **3** | **3** | **3** | **3** | **3** |
|---|---|---|---|---|---|---|---|---|---|---|---|
| Example | C1 | C1-11 | C1-12 | C2 | C2-3 | C3 | C3-3 | C3-4 | C4 | C4-1 | C4-2 |
| ASTM haze (%) | 0.1 | 0.1 | 0.1 | 0.1 | 0.1 | 0.1 | 0.1 | 0.1 | 0.1 | 0.1 | 0.1 |
| Sand Bayer | 5.1 | 5.1 | 5.0 | 5.2 | 5.2 | 5.0 | 5.1 | 5.0 | 5.1 | 5.0 | 5.1 |
| Initial BVC (%) | 25 | 25 | 26 | 4* | 5* | 20 | 20 | 21 | 22 | 21 | 21 |
| Loss % of YI after 40h Q-sun test | 0.8 | 0.5 | 0.3 | 0.5 | 0.2 | 0.7 | 0.4 | 0.3 | n.a. | n.a. | n.a. |
| * The coatings of examples C2 and C2-3 do not comprise blue light cutting dyes. | | | | | | | | | | | |

The coatings according to the invention showed low haze (generally 0.1%). They passed adhesion tests after 80h Q-sun test exposure. A comparison with the reference lenses (examples C1, C2, C3) shows that coatings including additives (UV absorbers, HALS, antioxidants) keep similar coating performances such as haze, Sand Bayer and adhesion in configurations 1, 2 or 3. However, in configuration 3, the lenses show less yellow color evolution than the control lenses (the loss % of YI after 40h Q-sun test is lower).

The blue light cut performances were good, ranging from 20 to 26 % (for coatings comprising blue light cutting dyes), with low photo-degradation after 40h Q-sun exposure. Higher concentrations of blue light cutting dyes can be used to achieve articles with high protection from blue light.

The performances of the coatings according to the invention were almost the same when the coating compositions were deposited 6 days after their preparation.

## Claims

1. Heat-curable composition comprising:

(a) at least one epoxy monomer having two or three epoxy groups, which is not a silicon compound having at least one hydrolyzable group directly linked to the silicon atom,
(b) at least one epoxy compound bearing at least one silicon atom having at least one hydrolyzable group directly linked to the silicon atom and at least one group comprising an epoxy function linked to the silicon atom though a carbon atom, and/or a hydrolyzate thereof, wherein the composition comprises from 1 to 15 % by weight of compounds (b) relative to the total weight of the composition,
(f) at least one UV absorber and/or (g) at least one antioxidant,
(c) at least one epoxy ring-opening catalyst, and

at least one compound (e) comprising at least two groups having the following formula:

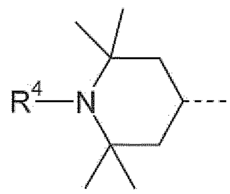

in which $R^4$ represents a hydrogen atom, an alkyl group, an alkoxy group or an oxyl group.

2. The composition according to claim 1, further comprising at least one organic solvent selected from glycol monoethers.

3. The composition according to any one of the preceding claims, further comprising:
(d) at least one epoxy monomer comprising from 4 to 8 epoxy groups that is not a silicon compound having at least one hydrolyzable group directly linked to the silicon atom.

4. The composition according to any one of the preceding claims, wherein compounds (b) are compounds of formula:

$$R_{n'}Y_mSi(X)_{4-n'-m} \qquad (II)$$

in which the R groups are identical or different and represent monovalent organic groups linked to the silicon atom through a carbon atom and that do not contain any epoxy group, the Y groups are identical or different and represent monovalent organic groups linked to the silicon atom through a carbon atom and contain at least one epoxy group, the X groups are identical or different and represent hydrolyzable groups or hydrogen atoms, m and n' are integers such that m is equal to 1 or 2 and n' + m = 1 or 2.

5. The composition according to any one of the preceding claims, wherein said at least one compound (e) is 2,4-bis[N-butyl-N-(1-cyclohexyloxy-2,2,6,6-tetramethylpiperidin-4-yl)aminol-6-(2-hydroxyethylamine)-1,3,5-triazine.

6. The composition according to any one of the preceding claims, wherein the composition comprises at least one antioxidant (g), which is triethylene glycol bis(3-tert-butyl-4-hydroxy-5-methylphenyl)propionate.

7. The composition according to any one of the preceding claims, further comprising:
(h) at least one absorbing dye that at least partially inhibits transmission of light in at least one selected wavelength range included within the 100-380 nm wavelength range, the 380-780 nm wavelength range, and/or the 780-1400 nm wavelength range.

8. The composition according to any one of the preceding claims, wherein the composition comprises at least 50 %, preferably at least 75 % by weight of compounds having at least one epoxy group, relative to the total weight of polymerizable compounds present in the composition.

9. The composition according to any one of the preceding claims, comprising from 10 to 60 % by weight of monomers

(a) and (d) (if present) relative to the total weight of the composition.

**10.** The composition according to any one of the preceding claims, wherein compounds (e) are present in an amount ranging from 0.05 % to 3 % relative to the total weight of the composition.

**11.** The composition according to any one of the preceding claims, wherein the epoxy groups are chosen from glycidyl groups and cycloaliphatic epoxy groups.

**12.** The composition according to any one of the preceding claims, wherein the ratio: dry extract weight of monomers (a) and (d) (if present) / dry extract weight of compounds (b) ranges from 97/3 to 70/30.

**13.** An optical article comprising a substrate having at least one main surface bearing a coating resulting from the heat-curing of a heat-curable composition according to any one of the preceding claims.

**14.** An optical article according to claim 13, further defined as an optical lens, preferably an ophthalmic lens.

**Patentansprüche**

**1.** Wärmehärtbare Zusammensetzung umfassend:

(a) wenigstens ein Epoxymonomer mit zwei oder drei Epoxygruppen, das keine Siliciumverbindung ist, die wenigstens eine hydrolysierbare Gruppe direkt an das Siliciumatom gebunden aufweist,
(b) wenigstens eine Epoxyverbindung, die wenigstens ein Siliciumatom trägt, das wenigstens eine hydrolysierbare Gruppe direkt an das Siliciumatom gebunden aufweist, und wenigstens eine Gruppe, die eine Epoxyfunktion umfasst, die durch ein Kohlenstoffatom an das Siliciumatom gebunden ist, und/oder ein Hydrolysat davon, wobei die Zusammensetzung von 1 bis 15 Gew.-% an Verbindungen (b) bezogen auf das Gesamtgewicht der Zusammensetzung umfasst,
(f) wenigstens einen UV-Absorber und/oder (g) wenigstens ein Antioxidationsmittel,
(c) wenigstens einen Epoxy-Ringöffnungskatalysator und wenigstens eine Verbindung (e), die wenigstens zwei Gruppen mit der folgenden Formel umfasst:

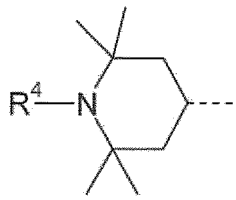

wobei $R^4$ ein Wasserstoffatom, eine Alkylgruppe, eine Alkoxygruppe oder eine Oxylgruppe darstellt.

**2.** Zusammensetzung gemäß Anspruch 1, ferner umfassend wenigstens ein organisches Lösungsmittel ausgewählt aus Glycolmonoethern.

**3.** Zusammensetzung gemäß einem der vorstehenden Ansprüche, ferner umfassend:
(d) wenigstens ein Epoxymonomer umfassend von 4 bis 8 Epoxygruppen, das keine Siliciumverbindung ist, die wenigstens eine hydrolysierbare Gruppe direkt an das Siliciumatom gebunden aufweist.

**4.** Zusammensetzung gemäß einem der vorstehenden Ansprüche, wobei Verbindungen (b) Verbindungen der Formel sind:

$$R_{n'}Y_mSi(X)_{4-n'-m} \qquad (II)$$

wobei die R-Gruppen gleich oder verschieden sind und einwertige organische Gruppen darstellen, die durch ein Kohlenstoffatom an das Siliciumatom gebunden sind und die keine Epoxygruppe tragen, die Y-Gruppen gleich oder verschieden sind und einwertige organische Gruppen darstellen, die durch ein Kohlenstoffatom an das Siliciumatom gebunden sind und wenigstens eine Epoxygruppe enthalten, die X-Gruppen gleich oder verschieden sind und

hydrolysierbare Gruppen oder Wasserstoffatome darstellen, m und n' ganze Zahlen sind, so dass m gleich 1 oder 2 ist und n' + m = 1 oder 2.

5. Zusammensetzung gemäß einem der vorstehenden Ansprüche, wobei die wenigstens eine Verbindung (e) 2,4-Bis[N-butyl-N-(1-cyclohexyloxy-2,2,6,6-tetramethylpiperidin-4-yl)amino]-6-(2-hydroxyethylamin)-1,3,5-triazin ist.

6. Zusammensetzung gemäß einem der vorstehenden Ansprüche, wobei die Zusammensetzung wenigstens ein Antioxidationsmittel (g) umfasst, das Triethylenglycolbis(3-tert-butyl-4-hydroxy-5-methylphenyl)propionat ist.

7. Zusammensetzung gemäß einem der vorstehenden Ansprüche, ferner umfassend:
(h) wenigstens einen absorbierenden Farbstoff, der die Lichtdurchlässigkeit in wenigstens einem ausgewählten Wellenlängenbereich, der in dem Wellenlängenbereich 100-380 nm, dem Wellenlängenbereich 380-780 nm und/oder dem Wellenlängenbereich 780-1400 nm enthalten ist, wenigstens teilweise hemmt.

8. Zusammensetzung gemäß einem der vorstehenden Ansprüche, wobei die Zusammensetzung wenigstens 50 Gew.-%, vorzugsweise wenigstens 75 Gew.-%, an Verbindungen, die wenigstens eine Epoxygruppe aufweisen, bezogen auf das Gesamtgewicht der in der Zusammensetzung vorhandenen polymerisierbaren Verbindungen umfasst.

9. Zusammensetzung gemäß einem der vorstehenden Ansprüche, umfassend von 10 bis 60 Gew.-% an Monomeren (a) und (d) (falls vorhanden) bezogen auf das Gesamtgewicht der Zusammensetzung.

10. Zusammensetzung gemäß einem der vorstehenden Ansprüche, wobei Verbindungen (e) in einer Menge in dem Bereich von 0,05 % bis 3 %, bezogen auf das Gesamtgewicht der Zusammensetzung, vorhanden sind.

11. Zusammensetzung gemäß einem der vorstehenden Ansprüche, wobei die Epoxygruppen ausgewählt sind aus Glycidylgruppen und cycloaliphatischen Epoxygruppen.

12. Zusammensetzung gemäß einem der vorstehenden Ansprüche, wobei das Verhältnis: Trockenextraktgewicht der Monomere (a) und (d) (falls vorhanden) / Trockenextraktgewicht der Verbindungen (b) in dem Bereich von 97/3 bis 70/30 liegt.

13. Optischer Gegenstand, umfassend ein Substrat mit wenigstens einer Hauptoberfläche, die eine Beschichtung trägt, die durch Wärmehärtung einer wärmehärtbaren Zusammensetzung gemäß einem der vorstehenden Ansprüche erhalten ist.

14. Optischer Gegenstand gemäß Anspruch 13, ferner definiert als eine optische Linse, vorzugsweise eine ophthalmische Linse.

## Revendications

1. Composition thermodurcissable comprenant :

(a) au moins un monomère d'époxy ayant deux ou trois groupes époxy, qui n'est pas un composé de silicium ayant au moins un groupe hydrolysable directement lié à l'atome de silicium,
(b) au moins un composé d'époxy portant au moins un atome de silicium ayant au moins un groupe hydrolysable directement lié à l'atome de silicium et au moins un groupe comprenant une fonction époxy liée à l'atome de silicium par le biais d'un atome de carbone, et/ou un hydrolysat correspondant,
la composition comprenant de 1 à 15 % en poids de composés (b) par rapport au poids total de la composition,
(f) au moins un absorbeur d'UV et/ou (g) au moins un antioxydant,
(c) au moins un catalyseur d'ouverture de cycle d'époxy, et

au moins un composé (e) comprenant au moins deux groupes ayant la formule suivante :

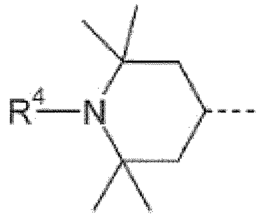

dans laquelle $R^4$ représente un atome d'hydrogène, un groupe alkyle, un groupe alcoxy ou un groupe oxyle.

2. Composition selon la revendication 1, comprenant en outre au moins un solvant organique choisi parmi des monoéthers de glycol.

3. Composition selon l'une quelconque des revendications précédentes, comprenant en outre : (d) au moins un monomère d'époxy comprenant de 4 à 8 groupes époxy qui n'est pas un composé de silicium ayant au moins un groupe hydrolysable directement lié à l'atome de silicium.

4. Composition selon l'une quelconque des revendications précédentes, dans laquelle les composés (b) sont des composés de formule :

$$R_{n'}Y_mSi(X)_{4-n'-m} \qquad (II)$$

dans laquelle les groupes R sont identiques ou différents et représentent des groupes organiques monovalents liés à l'atome de silicium par le biais d'un atome de carbone et qui ne contiennent aucun groupe époxy, les groupes Y sont identiques ou différents et représentent des groupes organiques monovalents liés à l'atome de silicium par le biais d'un atome de carbone et contiennent au moins un groupe époxy, les groupes X sont identiques ou différents et représentent des groupes hydrolysables ou des atomes d'hydrogène, m et n' sont des entiers de sorte que m est égal à 1 ou 2 et n' + m = 1 ou 2.

5. Composition selon l'une quelconque des revendications précédentes, dans laquelle ledit au moins un composé (e) est la 2,4-bis[N-butyl-N-(1-cyclohexyloxy-2,2,6,6-tétraméthylpipéridin-4-yl)amino]-6-(2-hydroxyéthylamine)-1,3,5-triazine.

6. Composition selon l'une quelconque des revendications précédentes, dans laquelle la composition comprend au moins un antioxydant (g), qui est le bis(3-tert-butyl-4-hydroxy-5-méthylphényl)propionate de triéthylèneglycol.

7. Composition selon l'une quelconque des revendications précédentes, comprenant en outre :
(h) au moins un colorant absorbant qui inhibe au moins partiellement la transmission de lumière dans au moins une plage de longueurs d'onde choisie comprise dans la plage de longueurs d'onde de 100 à 380 nm, la plage de longueurs d'onde de 380 à 780 nm et/ou la plage de longueurs d'onde de 780 à 1 400 nm.

8. Composition selon l'une quelconque des revendications précédentes, dans laquelle la composition comprend au moins 50 %, préférablement au moins 75 % en poids de composés ayant au moins un groupe époxy, par rapport au poids total de composés polymérisables présents dans la composition.

9. Composition selon l'une quelconque des revendications précédentes, comprenant de 10 à 60 % en poids de monomères (a) et (d) (s'ils sont présents) par rapport au poids total de la composition.

10. Composition selon l'une quelconque des revendications précédentes, dans laquelle les composés (e) sont présents en une quantité dans la plage de 0,05 % à 3 % par rapport au poids total de la composition.

11. Composition selon l'une quelconque des revendications précédentes, dans laquelle les groupes époxy sont choisis parmi des groupes glycidyle et des groupes époxy cycloaliphatiques.

12. Composition selon l'une quelconque des revendications précédentes, dans laquelle le rapport : poids d'extrait sec de monomères (a) et (d) (s'il est présent)/poids d'extrait sec de composés (b) se situe dans la plage de 97/3 à 70/30.

13. Article optique comprenant un substrat ayant au moins une surface principale portant un revêtement résultant du

thermodurcissement d'une composition thermodurcissable selon l'une quelconque des revendications précédentes.

14. Article optique selon la revendication 13, défini en outre comme une lentille optique, préférablement une lentille ophtalmique.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2008024414 A
- WO 2018095680 A
- EP 17306651 A
- US 8691926 B
- JP 2014148596 A
- WO 2013013929 A
- US 4294950 A
- US 4211823 A
- US 5015523 A
- EP 0614957 A
- US 20090311518 A
- US 20110058142 A
- WO 9410230 A
- US 20120295084 A
- EP 614957 A
- WO 2017077358 A
- US 8360574 B
- WO 2007146933 A
- WO 2015097186 A
- WO 2015097492 A
- US 4304895 A
- US 4528311 A
- US 2014252282 A
- WO 2007088312 A
- US 20030165698 A
- WO 2013098531 A
- WO 2010109154 A
- WO 2011080472 A
- WO 2012153072 A
- WO 2012076714 A
- WO 2011075128 A
- US 6268055 B
- WO 2012173596 A
- WO 2017077359 A
- US 7476415 B
- US 2014037964 A
- WO 2008107325 A


### Non-patent literature cited in the description


- **KITCHEL E.** The effects of blue light on ocular health. *Journal of Visual Impairment and Blindness,* 2000, vol. 94 (6
- **GLAZER-HOCKSTEIN.** *Retina,* 2006, vol. 26 (1), 1-4